# EUROPÄISCHE PATENTSCHRIFT

(11) **EP 1 637 838 B1**
(45) Veröffentlichungstag und Bekanntmachung des Hinweises auf die Patenterteilung: **23.09.2009**
(21) Anmeldenummer: 05090253.5
(22) Anmeldetag: 01.09.2005
(51) Int. Cl.: G01C 11/04, G06T 7/00

(54) **Verarbeitung von Fernerkundungsdaten**
Processing of remote sensing data
Traitement de données de télédétection

(30) Priorität: 15.09.2004 DE 102004045556; 15.09.2004 DE 102004045562; 15.09.2004 DE 102004045563
(43) Veröffentlichungstag der Anmeldung: 22.03.2006
(73) Patentinhaber: Deutsches Zentrum für Luft- und Raumfahrt e.V., 51147 Köln (DE)
(72) Erfinder: Borg, Erik, 16247 Joachimsthal (DE); Fichtelmann, Bernd Dr., 17235 Neustrelitz (DE); Böttcher, Jan, 53859 Niederkassel (DE); Günther, Adolf, 17235 Neustrelitz (DE)
(74) Vertreter: Patentanwälte Bressel und Partner

(56) Entgegenhaltungen:
- GOODENOUGH D G ET AL: "Queries and their application to reasoning with remote sensing and GIS" IGARSS '94. INTERNATIONAL GEOSCIENCE AND REMOTE SENSING SYMPOSIUM. SURFACE AND ATMOSPHERIC REMOTE SENSING: TECHNOLOGIES, DATA ANALYSIS AND INTERPRETATION (CAT. NO.94CH3378-7) IEEE NEW YORK, NY, USA, Bd. 2, 1994, Seiten 1199-1203 vol., XP002368975 ISBN: 0-7803-1497-2
- MATWIN S ET AL: "MACHINE LEARNING AND PLANNING FOR DTA MANAGEMENT IN FORESTRY" IEEE EXPERT, IEEE INC. NEW YORK, US, Bd. 10, Nr. 6, 1. Dezember 1995 (1995-12-01), Seiten 35-41, XP000539883 ISSN: 0885-9000
- SHARIAT HORMOZ: "Knowledge-based system for analysis of aerial images" PROC SPIE INT SOC OPT ENG; PROCEEDINGS OF SPIE - THE INTERNATIONAL SOCIETY FOR OPTICAL ENGINEERING 1991 PUBL BY INT SOC FOR OPTICAL ENGINEERING, BELLINGHAM, WA, USA, Bd. 1381, 5. November 1990 (1990-11-05), Seiten 306-317, XP009062159
- CHARLEBOIS D ET AL INSTITUTE OF ELECTRICAL AND ELECTRONICS ENGINEERS: "MACHINE LEARNING FROM REMOTE SENSING ANALYSIS" BETTER UNDERSTANDING OF EARTH ENVIRONMENT. TOKYO, AUG. 18 - 21, 1993, PROCEEDINGS OF THE INTERNATIONAL GEOSCIENCE AND REMOTE SENSING SYMPOSIUM (IGARSS), NEW YORK, IEEE, US, Bd. VOL. 1 SYMP. 13, 18. August 1993 (1993-08-18), Seiten 165-172, XP000481884
- CLEMENT V ET AL: "A multi-specialist architecture for sensor fusion in remote sensing" PATTERN RECOGNITION, 1992 . VOL.1. CONFERENCE A: COMPUTER VISION AND APPLICATIONS, PROCEEDINGS., 11TH IAPR INTERNATIONAL CONFERENCE ON THE HAGUE, NETHERLANDS 30 AUG.-3 SEPT. 1992, LOS ALAMITOS, CA, USA,IEEE COMPUT. SOC, US, 30. August 1992 (1992-08-30), Seiten 202-206, XP010029805 ISBN: 0-8186-2910-X

## Beschreibung

Fernerkundungsdaten bilden z. B. die Grundlage für vielfältige Untersuchungen des uns umgebenden Lebensraumes, angefangen vom Aufspüren von Bodenschätzen über satellitengestützte Kartierung der Erde bis hin zur Erfassung umweltrelevanter Daten. Somit kann ein großer Kreis von Anwendern diese Daten nutzbringend einsetzen. Dabei können dieselben Daten zur Lösung von Fragestellungen in unterschiedlichen Arbeitsgebieten verwendet werden.

Die Erfindung betrifft ein Verfahren und eine Anordnung zur Auswahl von Fernerkundungsdaten, insbesondere von Fernerkundungsdaten, die von einem Erdsatelliten aufgenommen wurden.

Die Erfindung betrifft insbesondere auch ein Verfahren und eine Anordnung zur Verarbeitung von Fernerkundungsdaten, insbesondere von Fernerkundungsdaten, die von einem Erdsatelliten aufgenommen wurden.

Vorhandene Verfahren und Systeme zum automatisierten Verarbeiten von Fernerkundungsdaten dienen meist einem einzigen Zweck. Zum Teil wird dabei ein hoher Kenntnisstand über Satelliten, über Fernerkundungsdaten und deren Verarbeitung beim Nutzer vorausgesetzt. Die Vernetzung des Empfangs, der Archivierung und der Datenverteilung von Fernerkundungsdaten und daraus erzeugten Datenprodukten wird national und international in den nächsten Jahren weiter zunehmen. Damit werden größere Datenmengen von Fernerkundungsdaten verfügbar sein, die zur Lösung unterschiedlicher Fragestellungen verwendet werden können. Abgesehen davon werden auch bereits vorhandene Datenbestände bisher nur unzureichend genutzt. Es werden darüber hinaus beständig neue Fernerkundungsmissionen initiiert, so dass die Datenmengen voraussichtlich noch weiter zunehmen werden. Daher wird es für den Nutzer der Fernerkundungsdaten und der Datenprodukte zunehmend schwieriger, den Überblick über die bestehenden Möglichkeiten zu behalten und die richtigen Daten und Produkte auszuwählen.

Die Veröffentlichung mit dem Titel "Machine Learning from Remote Sensing Analysis" von D. Charlebois, D. G. Goodenough und S. Matwin, Proceedings Of The International Geoscience And Remote Sensing Symposium (IGARSS), New York, IEEE, Bd. Vol. 1 SYMP. 13, 18. August 1993, Seiten 165-172 beschreibt ein intelligentes Ressourcen-Informationssystem. Das System wird zunächst durch Beispiele trainiert, die aus einer Anfrage, aus einem Datensatz eines einzelnen Sensors oder mehrerer Sensoren und geografischen Informationen, z.B. Waldbedeckung und Topografie, bestehen. Die Anfrage oder Produktliste etabliert die Ziele, die zu erfüllen sind. Ein Fall ist ein Plan, um ein bestimmtes Ziel zu lösen. Diese Pläne oder Fälle werden gespeichert und wie in der Veröffentlichung beschrieben verändert. Durch Erkennen von Wald-Attributen kann das System dynamisch zusätzliche Fernerkundungsdaten auswählen, um die Ziele zu erreichen. Das Datenverbindungs-Expertensystem schafft eine Übereinstimmung mit einer Anfrage mit den entsprechenden Anforderungen hinsichtlich der örtlichen Auflösung basierend auf einer Kenntnis der Objektskalierungen und wählt dynamisch die besten Fernerkundungsdaten aus, um das Waldobjekt zu erkennen.

Die Veröffentlichung mit dem Titel " Queries and their application to reasoning with remote sensing and GIS" von D. G. Goodenough, D. Charlebois, S. Matwin, D. MacDonald und A. J. Thomson, veröffentlicht in IGARSS 1994, International Geoscience And Remote Sensing Symposium, Surface And Atmospheric Remote Sensing: Technologies, Data Analysis And Interpretation (CAT.NO.94CH3378-7) IEEE New York, Bd. 2, 1994, Seiten 1199 bis 1203 beschreibt ein intelligentes System, das Fernerkundungsdaten von Flugzeugen und Satelliten mit raster- und vektorgeografischen Informationssystemen integriert. Das System bietet dem Benutzer zwei Wege, um ein Ziel zu spezifizieren: Produktauswahl aus einer Liste von verfügbaren Produkten und Applikationen sowie Anfragen. Der Benutzer kann seine Anfrage auf unterschiedliche Weise spezifizieren und ändern.

Die Veröffentlichung mit dem Titel "Machine learning and planning for data management in forestry" von S. Matwin, D. Gharlebois, D. G. Goodenough und P. Bhogal, veröffentlicht in IEEE Expert, Bd. 10, Nr. 6, 1. Dezember 1995, Seiten 35 bis 41 beschreibt ein System, das in Reaktion auf Benutzeranfragen antwortet und Produkte liefert.

Insbesondere soll bei einer Ausführungsform der Erfindung nach einem ersten Aspekt ein Verfahren und eine Anordnung zur Verarbeitung von Fernerkundungsdaten angegeben werden, die es ermöglichen, bei einer Vielzahl unterschiedlicher Ziele der Nutzung von Fernerkundungsdaten den Aufwand für die Nutzer der Fernerkundungsdaten gering zu halten. Insbesondere soll für den Nutzer kein umfangreiches Expertenwissen über Satelliten und/oder die Gewinnung von Fernerkundungsdaten erforderlich sein.

Bei vorhandenen Systemen zum Recherchieren von Fernerkundungsdaten, die für einen bestimmten Zweck geeignet sind, wird derzeit ein hoher Kenntnisstand über Satelliten und Fernerkundungsdaten beim Nutzer vorausgesetzt. Mit der wachsenden Vielfalt der Daten ergibt sich zwangsläufig eine Zunahme der Auswahlkriterien.

Die Vernetzung des Empfangs, der Archivierung und der Datenverteilung von Fernerkundungsdaten und daraus erzeugten Datenprodukten wird national und international in den nächsten Jahren zunehmen. Damit werden größere Datenmengen von Fernerkundungsdaten verfügbar sein, die zur Lösung unterschiedlicher Fragestellungen verwendet werden können. Es werden darüber hinaus beständig neue Fernerkundungsmissionen initiiert, so dass die Datenmengen voraussichtlich noch weiter zunehmen werden. Andererseits wird es für den Nutzer der Fernerkundungsdaten und der Datenprodukte zunehmend schwieriger, den Überblick über die bestehenden Möglichkeiten zu behalten und die richtigen Daten und Produkte auszuwählen.

Es ist eine Aufgabe der vorliegenden Erfindung, ein Verfahren und eine Anordnung zur Auswahl von Fernerkundungsdaten anzugeben, die es ermöglichen, aus einer Vielzahl von verfügbaren Alternativen diejenige zu identifizieren, die den Anforderungen des Nutzers am nächsten kommt. Dabei sollen reproduzierbare Ergebnisse erzielt werden können und Expertenwissen nicht erforderlich sein.
Die beigefügten Patentansprüche definieren den Schutzumfang der Erfindung.

Eine Ausführungsform der Erfindung umfaßt ein Verfahren und eine Anordnung zur automatischen Georeferenzierung von Fernerkundungsdaten, insbesondere von Fernerkundungsdaten, die von einem Erdsatelliten aufgenommen wurden.

Die Georeferenzierung von Fernerkundungsdaten (d. h. die Zuordnung der Fernerkundungsdaten zu geografischen Informationen z. B. aus einer Karte der Erdoberfläche) ist eine grundlegende Aufgabe der Weiterverarbeitung von Fernerkundungsdaten. Insbesondere ist sie Voraussetzung für die Erzeugung von abgeleiteten Daten wie z. B. landwirtschaftlich nutzbaren Daten. Da die Fernerkundungsdaten von Satelliten zunächst in der so genannten Satellitenprojektion vorliegen und diese im Vergleich zu geografischen Projektionen in der Regel verzerrt sind, spricht man auch von der Entzerrung der Fernerkundungsdaten bzw. der Entzerrung von Satellitenbildern. Dabei sind bisher im Wesentlichen zwei verschiedene Vorgehensweisen bekannt. Bei der Methode der Positionsberechnung wird ein Abbildungsmodell verwendet, mit dem die Bewegung des Satelliten möglichst genau nachgebildet wird. Dazu werden Informationen zur Satellitenbahn, der jeweiligen Lage des Satelliten, der Lage des Aufnahmesystems (mit einem oder mehreren Sensoren) im Satelliten, der abbildenden Optik und der Form des Erdkörpers benötigt.

Bei der Methode der Nutzung von so genannten Passpunkten werden charakteristische Bildstrukturen betrachtet, die sowohl im Satellitenbild als auch im Referenzbild identifiziert und wieder erkannt werden können, so dass die Positionsbestimmung durch Vergleich der Positionen in beiden Bildern vorgenommen werden kann. Damit liegen aber, im Gegensatz zum Abbildungsmodell, nur die Positionen der Passpunkte vor. Alle anderen Positionen werden mit Hilfe eines Interpolationsmodells bestimmt bzw. zugeordnet. Auch eine Kombination beider Methoden wird praktiziert.

In beiden Fällen hat die Georeferenzierung die geografische Zuordnung der gemessenen Pixel der Fernerkundungsdaten zum Ziel. Bei interaktiven Verfahren (d. h. Verfahren, an denen ein menschlicher Operator beteiligt ist) wird in der Regel eine geografische Referenz (z.B. ein entzerrtes Bild oder eine geografische Karte) genutzt, um die geografische Zuordnung durchzuführen. Die automatischen Verfahren beruhen in den meisten Fällen auf der genauen Kenntnis der Abbildungsgeometrie und der Bereitstellung der entsprechend erforderlichen Abbildungsparameter.

Unter einer Satellitenprojektion wird eine Projektion verstanden, die sich aus der Projektion des beobachteten Objekts (z. B. Bereich der Erde oder Bereich eines anderen Raumkörpers, z. B. eines anderen Planeten) auf die Sensorebene (bzw. Bildebene) des Satelliten ergibt. Somit hängt das Ergebnis der Projektion von der Position und dem Blickwinkel des Satelliten auf das in der Fernerkundung beobachtete Objekt ab. Dabei können Korrekturen (z. B. Korrektur von Offset und Verstärkung eines Sensors) und/oder Operationen bereits an den in der Satellitenprojektion vorliegenden Fernerkundungsdaten vorgenommen worden sein. Insbesondere können die von einem Sensor des Satelliten gelieferten Messsignale aus einem Scanvorgang in ein gemeinsames Koordinatensystem der Satellitenprojektion umgerechnet worden sein. Beispielsweise sind dabei Messsignale des Sensors verwendet worden, die während des Scanvorganges nacheinander gemessen wurden.

Bei vielen Verfahren der Georeferenzierung wird der Informationsgehalt der Fernerkundungsdaten (z.B. multispektrale Daten) verändert. Beispielsweise werden die Daten auf ein festes Datenraster (z. B. ein Raster von Linien gleicher geografischer Breite und Länge) entzerrt, wobei jeder einzelne Bildpunkt, der auf dieses Raster bezogen wird, sich in der Regel aus mehreren einander benachbarten Bildpunkten in der Satellitenprojektion zusammensetzen kann. Es findet daher eine Mittelwertbildung statt. Folglich bleiben beispielsweise die von einem Sensor des Satelliten gemessenen Grauwerte oder die von dem Satelliten gemessene spektrale Charakteristik nicht erhalten und stehen daher für eine weitere Verarbeitung nur in veränderter Form zur Verfügung. Diese Vorgehensweise hat sich jedoch vor allem im Bereich der interaktiven Bildverarbeitung etabliert, da sowohl der Operator mögliche Veränderungen im weiteren Verarbeitungsprozess intuitiv ausgleichen kann.

Die Veränderung der Grauwerte oder der spektralen Charakteristik ist aber gerade dann störend, wenn die Daten automatisch weiterverarbeitet werden sollen und dabei physikalische Zusammenhänge berücksichtigt werden. Nach der Mittelwertbildung können die ursprünglichen Grauwerte oder die ursprüngliche spektrale Charakteristik nicht mehr berechnet werden. Daher sind die Ergebnisse mit einem Fehler behaftet. Das Ziel besteht aber in der Ableitung hochgenauer quantitativer Aussagen und/oder Parameter.

Mit der obengenannten Ausführungsform ist die Aufgabe verbunden, ein Verfahren und eine Anordnung der eingangs genannten Art anzugeben, bei denen physikalische Eigenschaften wie die Grauwertcharakteristik und die spektrale Charakteristik der von dem Satelliten gemessenen Fernerkundungsdaten erhalten bleiben. Ferner sollen keine Eingriffe oder Aktionen von Bedienungspersonal und kein Expertenwissen bei der Georeferenzierung erforderlich sein.

Gemäß einer weiteren Ausführungform der Erfindung wird vorgeschlagen, automatisch bestehende Verarbeitungsroutinen zur Verarbeitung der Fernerkundungsdaten auszuwählen und unter Verwendung der ausgewählten Verarbeitungsroutinen Fernerkundungsdaten zu verarbeiten. Dabei erfolgt die Auswahl der Verarbeitungsroutinen abhängig von dem jeweiligen Ziel und/oder Zweck der Nutzung von Fernerkundungsdaten.

Dabei kann zumindest eine der ausgewählten Verarbeitungsroutinen eine themabezogene Verarbeitungsroutine sein, die zur Erfüllung zumindest einer Anforderung an die Nutzung der Fernerkundungsdaten erforderlich ist, wobei die Anforderung ein bestimmtes Thema der Nutzung von Fernerkundungsdaten betrifft (z. B. Identifizierung bestimmter Stoffe in einem Beobachtungsgebiet der Fernerkundung). Es kann eine Vielzahl der themabezogenen Verarbeitungsroutinen zur Verfügung stehen. Solche Verarbeitungsroutinen können bei der Verarbeitung der Daten insbesondere Zusatzinformationen über die Beobachtungsobjekte und/oder Beobachtungsgebiete verwenden, wobei die Zusatzinformationen auf das Thema der Auswertung bezogen sind. Z. B. stellen die Zusatzinformationen den Zusammenhang zwischen dem Spektrum und/oder den Wellenlängen von elektromagnetischer Strahlung und dem Vorhandensein und/oder der lokalen Konzentration von bestimmten Stoffen (z. B. Chlorophyll, Ozon), der Objekttemperatur oder dem Vorhandensein bestimmter Vegetation her. Die elektromagnetischen Strahlen werden von dem Objekt oder Stoff emittiert und/oder reflektiert und werden von einem Sensor erfasst, der die Fernerkundungsdaten erzeugt.

Insbesondere weisen die Verarbeitungsroutinen zum Teil einen Charakter der Standardverarbeitung (Standardverarbeitungsroutinen) auf, wobei die Standardverarbeitungsroutinen bei einer Vielzahl von Anforderungen ausgeführt werden. Bei diesen Standardverarbeitungsroutinen kann es sich auch um Routinen handeln, die (außer in Ausnahmefällen) immer ausgeführt werden, z. B. um Verarbeitungsroutinen zur Berücksichtigung von Eigenschaften eines Sensors (z. B. Verstärkung und Offset, so genannte Kalibration), zur Zuordnung von geografischen Informationen (z. B. geografische Breite und geografische Länge) zu den Fernerkundungsdaten, zur Korrektur des Einflusses einer Atmosphäre auf die Fernerkundungsdaten (z. B. Streueffekte und Reflexionen) und/oder zur Erstellung einer geografischen Karte, die Ergebnisse der Verarbeitung der Fernerkundungsdaten zeigt.

Unter Verarbeitungsroutinen werden definierte Prozesse zur Verarbeitung von Fernerkundungsdaten verstanden, die beispielsweise als Software-Module implementiert sein können. Vorzugsweise haben die Verarbeitungsroutinen standardisierte Schnittstellen zur Eingabe der zu verarbeitenden Fernerkundungsdaten und zur Ausgabe der verarbeiteten Fernerkundungsdaten, sodass einerseits beliebige Fernerkundungsdaten der Schnittstelle entsprechend aufbereitet werden (z. B. Fernerkundungsdaten, die von unterschiedlichen Sensoren und/oder von unterschiedlichen Satelliten aufgenommen wurden) und von den Verarbeitungsroutinen verarbeitet werden können und andererseits Verarbeitungsroutinen leicht durch andere ersetzt werden können. Dabei kann jedoch zumindest teilweise (z. B. bei Standardverarbeitungsroutinen) eine bestimmte Reihenfolge der Verarbeitung vorgesehen sein, sodass manche Verarbeitungsroutinen nur vor oder nach anderen Verarbeitungsroutinen ausgeführt werden können. Vorzugsweise sind die Verarbeitungsroutinen jedoch in beliebiger Reihenfolge nacheinander ausführbar.

Weiterhin wird bevorzugt, dass zumindest ein Teil der Verarbeitungsroutinen sich automatisch selbst an eine gegebene Aufgabe anpasst, insbesondere an eine konkrete Verknüpfung mit anderen Routinen und/oder an die Verarbeitung bestimmter Fernerkundungsdaten. Bei dieser Selbstkonfiguration kann eine Verarbeitungsroutinen beispielsweise an Hand von Metadaten der Fernerkundungsdaten feststellen, welches Format und/oder welche Eigenschaften die Fernerkundungsdaten aufweisen. Beispielsweise ermittelt die Verarbeitungsroutine aus den Metadaten eine Schwadbreite des Sensors, der die Fernerkundungsdaten aufgenommen hat, eine geometrische Auflösung (Pixelauflösung), die durch eine Aufteilung eines aufgenommenen Bildes in Bildelemente maximal erzielt werden kann, und/oder weitere Informationen zur Verarbeitung der Fernerkundungsdaten. Unter Metadaten werden Daten verstanden, die beim Empfang von Satellitendaten durch eine Empfangsstation am Boden zusätzlich zu den Fernerkundungsdaten generiert werden. Insbesondere wird in den Metadaten festgehalten, welcher Sensor die Fernerkundungsdaten aufgezeichnet hat und wann die Satellitendaten von der Empfangsstation empfangen wurden.

Die Erfindung ermöglicht es, die Vielzahl der für bestimmte Fragestellungen nutzbaren Fernerkundungsdaten zu berücksichtigen und/oder die Fernerkundungsdaten in eine gemeinsame Analyse einzubeziehen. Durch die Automatisierung bei der Auswertung der Fernerkundungsdaten können große Datenbestände vollständig und systematisch erschlossen werden. Die Erfindung ermöglicht es insbesondere, die Zeit bis zur Fertigstellung so genannter Fernerkundungsdaten-Produkte, für die eine spezielle Datenverarbeitung unter Verwendung von Zusatzinformationen (z. B. Zusatzinformationen aus den Metadaten) erforderlich ist (englisch: value-added products), deutlich zu verkürzen.

Insbesondere wird auch ein Verfahren zur Verarbeitung von Fernerkundungsdaten vorgeschlagen, insbesondere von Fernerkundungsdaten, die von einem Erdsatelliten aufgenommen wurden, wobei
- Verarbeitungsroutinen zur Verarbeitung der Fernerkundungsdaten zur Verfügung stehen und/oder erstellt werden, wobei die Verarbeitungsroutinen für eine Verarbeitung einer Vielzahl von unterschiedlichen Fernerkundungsdaten einsetzbar sind,
- unter Verwendung zumindest einer definierten Anforderung an eine Nutzung von Fernerkundungsdaten automatisch eine Mehrzahl der Verarbeitungsroutinen ausgewählt wird und die ausgewählten Verarbeitungsroutinen automatisch miteinander verknüpft werden, sodass die ausgewählten Verarbeitungsroutinen durch Verarbeitung von Fernerkundungsdaten die zumindest eine definierte Anforderung erfüllen.

Durch Definition der Anforderung oder Anforderungen kann der Nutzer eine für ihn aufwändig zu erlernende Bedienung komplexer Systeme vermeiden. Aufgrund der zur Verfügung stehenden Verarbeitungsroutinen können ohne weitere Tätigkeit des Nutzers automatisch die geeigneten Verarbeitungsroutinen ausgewählt werden, miteinander verknüpft werden und kann die Verarbeitung durchgeführt werden. Außerdem kann die Verarbeitung reproduzierbar in der gleichen Weise wiederholt werden, wobei verschiedene (z. B. in verschiedenen Zeiträumen aufgenommene) Fernerkundungsdaten verarbeitet werden können.

Ferner können auch Fernerkundungsdaten unter Verwendung der zumindest einen definierten Anforderung automatisch ausgewählt werden, sodass die ausgewählten Fernerkundungsdaten zur Erfüllung der Anforderung geeignet sind. Um eine automatische Verarbeitung von Fernerkundungsdaten zu initialisieren und zu konfigurieren, kann (beispielsweise interaktiv durch Nutzung von Software) eine Anfrage an einen Nutzer formuliert werden. Aus den vom Nutzer eingegebenen Informationen kann automatisch ein Vorschlag für eine Auswahl von Fernerkundungssensoren (bzw. den entsprechenden Fernerkundungsdaten) erzeugt werden. Darüber hinaus ist es möglich, automatisch eine Mehrzahl von Vorschlägen zu erzeugen, die entsprechend einem Grad der Übereinstimmung mit den Anforderungen des Nutzers bewertet und/oder geordnet sind. Somit erhält der Nutzer verschiedene Alternativen für die Erreichung seines Ziels. Der Nutzer kann dann beispielsweise eine der Alternativen auswählen oder es wird die mit den Anforderungen am besten übereinstimmende Alternative automatisch ausgewählt. Wird dem Nutzer ein Vorschlag unterbreitet, können geeignete Fernerkundungsdaten und/oder eine Verknüpfung der Verarbeitungsroutinen an den Nutzer ausgegeben werden.

Insbesondere können die Anforderungen als Anforderungsprofil mit einer Mehrzahl von Teil-Anforderungen formuliert werden, wobei das Anforderungsprofil eine Mehrzahl von Kategorien aufweisen kann, sodass eine Mehrzahl von Eigenschaften der Fernerkundungsdaten und/oder des Ziels der Verarbeitung der Fernerkundungsdaten eingegeben oder abgeleitet werden kann. Das Anforderungsprofil kann auch Randbedingungen wie ein vom Nutzer vorgegebenes Kostenlimit enthalten. Wesentliche Informationen, die dabei für die Konfiguration der Verarbeitung von Fernerkundungsdaten geliefert werden können, sind: örtliche Auflösung eines durch Fernerkundungsdaten erfassten Beobachtungsobjekts, zeitliche Auflösung bei der Erfassung des Beobachtungsobjekts, spektrale Auflösung der Fernerkundungsdaten und/oder radiometrische Auflösung (z. B. Anzahl der pro Bildelement zur Verfügung stehenden digitalen Speicherbits).

Vorzugsweise wird durch die Verknüpfung der ausgewählten Verarbeitungsroutinen eine Prozesskette zur Verarbeitung der ausgewählten Fernerkundungsdaten gebildet, wobei die Fernerkundungsdaten in der Prozesskette nacheinander jeweils durch eine der ausgewählten Verarbeitungsroutinen verarbeitet werden.

Ferner wird eine Anordnung zur Auswahl von Fernerkundungsdaten vorgeschlagen, insbesondere von Fernerkundungsdaten, die von einem Erdsatelliten aufgenommen wurden, wobei die Anordnung Folgendes aufweist:
- eine Mehrzahl von Verarbeitungsroutinen zur Verarbeitung der Fernerkundungsdaten,
- eine Schnittstelle zur Eingabe zumindest einer definierten Anforderung an eine Nutzung von Fernerkundungsdaten,
- eine Verknüpfungseinrichtung, die ausgestaltet ist, unter Verwendung der zumindest einen definierten Anforderung zumindest eine Teilanzahl der Verarbeitungsroutinen auszuwählen und zu verknüpfen, sodass die ausgewählten Verarbeitungsroutinen durch Verarbeitung von Fernerkundungsdaten die zumindest eine definierte Anforderung erfüllen können.

Die Fernerkundungsdaten werden insbesondere vollautomatisch von den Verarbeitungsroutinen verarbeitet. Insbesondere können die ausgewählten Verarbeitungsroutinen zu einer Prozesskette verknüpft sein, wobei die Fernerkundungsdaten in der Prozesskette automatisch nacheinander jeweils durch eine der ausgewählten Verarbeitungsroutinen verarbeitet werden können.

Von der Erfindung ist ferner ein Computerprogramm zur Verarbeitung von Fernerkundungsdaten umfasst, wobei Programmcode-Mittel des Computerprogramms ausgestaltet sind, das erfindungsgemäße Verfahren in zumindest einer seiner Ausgestaltungen auszuführen. Insbesondere können die Programmcode-Mittel auf einem computerlesbaren Datenträger gespeichert sein. Weiterhin gehört zum Umfang der Erfindung ein Datenträger und/oder ein Computersystem, auf dem eine Datenstruktur gespeichert ist, die nach einem Laden in einen Arbeits- und/oder Hauptspeicher eines Computers oder Computer-Netzwerkes das Computerprogramm ausführt. Das Computerprogramm kann direkt (beispielsweise über ein Daten-Fernverbindungsnetz) auf mindestens ein Archivsystem zugreifen, in dem Fernerkundungsdaten gespeichert sind.

In Übereinstimmung mit Anspruch 1 wird ein Verfahren zur Auswahl von Fernerkundungsdaten vorgeschlagen, insbesondere von Fernerkundungsdaten, die von einem Erdsatelliten aufgenommen wurden. Dabei werden
- Aufgabenprofildaten verwendet, die Aufgaben und/oder Ziele einer Nutzung von Fernerkundungsdaten definieren,
- automatisch zumindest eine physikalische Dateneigenschaft, insbesondere eine Auflösung, von Fernerkundungsdaten den Aufgabenprofildaten zugeordnet, sodass zumindest eine Anforderung an die Nutzung von Fernerkundungsdaten definiert ist,
- Dateneigenschaften von verfügbaren Fernerkundungsdaten unter Verwendung der zumindest einen Anforderung geprüft und festgestellt, ob und/oder bis zu welchem Grad mit den verfügbaren Fernerkundungsdaten die zumindest eine Anforderung erfüllt werden kann, und
- ein Ergebnis der Feststellung automatisch ausgegeben.

Unter einer Auswahl von Fernerkundungsdaten wird sowohl die Auswahl bereits vorhandener Fernerkundungsdaten als auch die Auswahl von zukünftig verfügbaren Fernerkundungsdaten verstanden. Dementsprechend werden unter "verfügbaren Daten" auch zukünftig verfügbare Daten verstanden. Mit den Anforderungen, insbesondere einem Anforderungsprofil, und mit dem Ergebnis der zuvor genannten Feststellung ist die Auswahl möglich. Der Zugriff auf die Daten (z. B. Abrufen und Laden von Daten) kann unmittelbar im Anschluss daran erfolgen oder später. Es kann auch auf den Zugriff verzichtet werden, z. B. wenn festgestellt wird, dass die Kosten für den Zugriff unerwartet hoch sind.

Bei den physikalischen Dateneigenschaften handelt es sich insbesondere um eine oder mehrere der folgenden Dateneigenschaften: örtliche Auflösung eines durch Fernerkundungsdaten erfassten Beobachtungsobjekts, zeitliche Auflösung bei der Erfassung des Beobachtungsobjekts, spektrale Auflösung der Fernerkundungsdaten und/oder radiometrische Auflösung (z. B. Anzahl der pro Bildelement zur Verfügung stehenden digitalen Speicherbits).

Die Aufgabenprofildaten werden z. B. in einem Dialog mit einem Nutzer der Fernerkundungsdaten erzeugt. Beispielsweise legt der Nutzer an Hand einer Reihe von Angaben fest, für welche Aufgaben die Fernerkundungsdaten genutzt werden sollen. Derartige Angaben sind z. B. die zeitlich-räumliche Dynamik eines durch Auswertung der Fernerkundungsdaten zu erfassenden Phänomens (z. B. eines phenologischen Verlaufs von Vegetation, einer zeitlichen Veränderung von elektromagnetischer Strahlung, die von einer beobachteten Oberfläche ausgeht, oder einer Chlorophyll-Konzentration von Gewässern). Weiterhin kann der Nutzer zum Beispiel das (z. B. wissenschaftliche) Arbeitsgebiet und/oder den ökonomischen oder administrativen Tätigkeitsbereich (z. B. Erstellung von Karten für eine Wohngemeinde) angeben, in dem die Fernerkundungsdaten genutzt werden sollen. Dabei können die vom Nutzer geforderten Informationen scharf oder unscharf eingegeben werden. Um derartige Aussagen treffen zu können, kann eine Nutzer-Schnittstelle mit einer Maske zur Verfügung stehen, die ihm die Eingabe unscharfer Information ermöglicht.

Entsprechend der oben als Beispiel erwähnten physikalischen Dateneigenschaften können die Anforderungen die Nutzbarkeit der Fernerkundungsdaten hinsichtlich der räumlichen, zeitlichen, spektralen und radiometrischen Auflösung eingrenzen, d. h. es werden bei vollständiger Erfüllung der Anforderungen nur Daten mit entsprechend eingegrenzter Auflösung verwendet.

Insbesondere werden bei der Definition der Anforderungen definierte Regeln verwendet. Es kann ein Anforderungsprofil erstellt werden, das die von den Fernerkundungsdaten bzw. dem Fernerkundungsdaten-Verarbeitungssystem (inklusive Verarbeitungsroutinen) zu erfüllenden Anforderungen beschreibt. Dabei können zusätzlich die Angaben des Aufgabenprofils (und optional eines Nutzerprofils, s.u.) auf Konsistenz hin abgeprüft werden, so dass das System:
- mit dem Nutzer interaktiv Unstimmigkeiten abklären kann und/oder
- auf Wunsch ein korrigiertes Aufgabenprofil erstellen kann. Das korrigierte Aufgabenprofil kann das bisherige Aufgabenprofil ersetzen und das Verfahren kann wie oben beschrieben erneut mit dem korrigierten Aufgabenprofil ausgeführt werden.

Optional kann außerdem ein Nutzerprofil erstellt werden, z. B. wiederum in einem Dialog mit dem Nutzer: Durch eine Reihe von Angaben gibt der Nutzer ein Informationsprofil an. Hierzu gehören z.B. Angaben zum Verwendungszweck (d. h. zu dem thematischen Umfeld der Arbeit des Nutzers), zu seinem Kenntnisstand hinsichtlich der Fernerkundungsdatennutzung und -verarbeitung und/oder zum Entscheidungs- und Handlungspotential einer Institution, die er im Rahmen der an die Fernerkundung gestellten Aufgabe vertritt. Die Eingabe der abgefragten Informationen kann dem Nutzer durch eine definierte Eingabemaske ermöglicht werden, über die er scharfe (präzise) bzw. unscharfe Angaben machen kann. Es ist auch möglich, dass der Nutzer, physikalisch basierte Kriterien (z.B. zeitlich-räumliche Auflösung) für die Nutzung der Fernerkundungsdaten angibt.

Wenn ein Nutzerprofil erstellt wird, kann die zumindest eine physikalische Dateneigenschaft von Fernerkundungsdaten den Aufgabenprofildaten und den Nutzerprofildaten zugeordnet werden, sodass die zumindest eine Anforderung an die Nutzung von Fernerkundungsdaten definiert ist. Wenn ein Nutzerprofil nicht erstellt wird, kann das Aufgabenprofil als fundiert angenommen werden und als Grundlage bei der Feststellung des Ergebnisses dienen.

Optional kann der Nutzer Präferenzen bezüglich des Bewertungs- und Auswahlproblems festlegen. Die Präferenzen können insbesondere dazu genutzt werden, den Einfluss festzulegen, den Randbedingungen (wie z.B. Kosten der Nutzung von Fernerkundungsdaten und Datenverarbeitungsprodukten, Datenverfügbarkeit, Bereitstellungszeitraum, Genauigkeit und Qualität der Daten, Grad der Erfüllung eines durch den Nutzer definierten Aufgabenprofils) auf das Auswahlergebnis ausüben.

Die Erfindung hat den Vorteil, dass aus theoretisch unbegrenzten Mengen von Fernerkundungsdaten automatisch Daten ausgewählt werden können, die für einen bestimmten Zweck geeignet sind. Dabei ist kein Expertenwissen erforderlich, da auch von unerfahrenen Nutzern eingegebene Informationen auf Grund der Zuordnung physikalischer Dateneigenschaften zu physikalisch definierten Anforderungen an die Nutzung der Fernerkundungsdaten führen. Insbesondere weisen die vielen verschiedenen Satelliten Sensoren unterschiedlicher Art (z.B. mit unterschiedlicher zeitlicher, räumlicher und spektraler Auflösung) auf. Daten, die den Anforderungen entsprechende Dateneigenschaften haben, können also nun von einem automatisch arbeitenden Datenverarbeitungssystem z. B. in einer oder mehreren Datenbanken gesucht werden. Es können auch zusätzliche Randbedingungen berücksichtigt werden (s.o.).

Hinzu kommt das Multifunktionalitätskonzept der Fernerkundung, das der Nutzer in der Regel bei einer Auswahl von Fernerkundungsdaten nicht oder nicht vollständig berücksichtigen kann. Das Multifunktionalitätskonzept weist folgende Aspekte auf:
a) Multitemporale Erkundung, d.h. identische Landschaftsobjekte werden zu unterschiedlichen Zeitpunkten erfasst.
b) Multistationäre und -sensorielle Messung, d. h. identische Objekte werden bei unterschiedlicher Beobachtungsgeometrie (Bahn-/Flughöhe, Blick-/Beleuchtungswinkel des Satelliten) und durch unterschiedliche Sensoren (z. B. passive/aktive Sensoren) beobachtet.
c) Multispektrale Erkundung, d. h. Objekte werden in verschiedenen Spektralbereichen gemessen (charakteristische Spektralsignaturen).
d) Multiple Nutzbarkeit, d. h. Nutzung der Daten zur Lösung verschiedener Aufgaben sowie in Kombination mit Daten anderer Herkunft zur Ableitung komplexer Informationen.

Auf Grund der Erfindung wird das Multifunktionalitätskonzept automatisch berücksichtigt. Zum Beispiel gibt der Nutzer als Teil der Aufgabenprofildaten Informationen ein, aus denen hervorgeht, dass Eigenschaften bestimmter Landschaftsobjekte mit den Fernerkundungsdaten ausgewertet werden sollen (siehe Punkt a). Bei der Zuordnung der physikalischen Dateneigenschaften kann daher automatisch berücksichtigt werden, dass dasselbe Landschaftsobjekt von demselben Satelliten nur mit zeitlichen Unterbrechungen und wiederkehrend beobachtet werden kann (siehe Punkt b).

Allgemeiner formuliert ist bei einer Weiterbildung der Erfindung ein physikalisches Modell implementiert, das es erlaubt, die Bewegung von Satelliten relativ zur Oberfläche des Planeten (oder anderen Objekts) bei der Definition der Anforderungen zu berücksichtigen. Insbesondere können weitere Informationen, z. B. über die Ausrichtung eines Sensors des Satelliten, in dem Modell berücksichtigt werden. Die für das Modell erforderlichen Eingangsinformationen sind beispielsweise in einer Datenbank abgelegt und/oder können von dem Nutzer eingegeben werden.

Entsprechendes gilt für die Punkte c) und d) der obigen Aufzählung. Insbesondere können bei der Definition der Anforderungen alternativ oder zusätzlich berücksichtigt werden:
- Informationen über verschiedene Sensoren in oder an demselben Satelliten und
- physikalische Eigenschaften von Sensoren, mit denen Fernerkundungsdaten aufgenommen werden (z. B. Spektralbereiche, in denen ein Sensor Strahlung detektieren kann, spektrale Empfindlichkeiten der Sensoren).
   Wie aus Punkt d) folgt, können unterschiedliche Aufgaben oder sogar unterschiedliche Aufgabenprofile zu der Auswahl derselben Fernerkundungsdaten und derselben Verarbeitungsroutinen führen. Daher kann es vorkommen, dass bereits das Anforderungsprofil ähnlich oder identisch ist, obwohl die Aufgaben unterschiedlich sind. Insbesondere sind daher Mehrfachzuordnungen derselben physikalischen Eigenschaften zu unterschiedlichen Aufgaben möglich.

Die Erfindung kann insbesondere für ein Beratungssystem genutzt werden, das dem Nutzer bei der genauen Definition einer oder mehrerer der folgenden Prozesse hilft oder den oder die Prozesse ganz oder teilweise ausführt oder die Ausführung vorbereitet:
- problemorientierte Auswahl von Fernerkundungsdaten,
- Anforderungen an die Fernerkundung hinsichtlich der räumlich, zeitlichen, spektralen und radiometrischen Auflösung,
- Navigation durch Datenbestände und
- problemorientierte Produktdefinition (d. h. Definition eines Ergebnisses einer Weiterverarbeitung der Fernerkundungsdaten)

Bei einer bevorzugten Ausgestaltung der Erfindung werden die aus den Aufgabenprofildaten erzeugten Anforderungen an die Nutzung von Fernerkundungsdaten zur Steuerung einer Datenverarbeitung der Fernerkundungsdaten verwendet. Insbesondere werden aus einer oder mehreren Datenbanken den Anforderungen entsprechende Fernerkundungsdaten angefordert und geladen und wird die Datenverarbeitung der geladenen Daten gesteuert.

Insbesondere kann unter Verwendung der Anforderungen zumindest eine vordefinierte Verarbeitungsroutine zur Verarbeitung der Fernerkundungsdaten ausgewählt werden. Weitere Ausgestaltungen einer derartigen Steuerung sind möglich.

Bei der Prüfung, ob die zumindest eine Anforderung erfüllt werden kann, werden ein Anforderungsprofil (mit der zumindest einen Anforderung) und ein Leistungsprofil der Fernerkundungsdaten miteinander verglichen. Das Leistungsprofil der Fernerkundungsdaten enthält Informationen darüber, welche Leistungen (bereits heute oder zukünftig) verfügbare Fernerkundungsdaten erfüllen können. Das Leistungsprofil und das Anforderungsprofil weisen die gleichen Arten und/oder die gleiche Anzahl von Kategorien von Eigenschaften der Fernerkundungsdaten auf. Es wird ein paarweiser Vergleich der in den einander entsprechenden Kategorien abgelegten Eigenschaften durchgeführt.

Das Anforderungsprofil und das Leistungsprofil weisen beispielsweise jeweils die folgenden Kategorien auf:
- ein Arbeitsgebiet, wobei die Fernerkundungsdaten für eine Tätigkeit auf dem Arbeitsgebiet genutzt werden sollen,
- die geometrische Auflösung der Fernerkundungsdaten,
- die zeitliche Auflösung der Fernerkundungsdaten,
- die radiometrische Auflösung der Fernerkundungsdaten,
- die spektrale Auflösung der Fernerkundungsdaten,
- optional: einen Ort und/oder ein Gebiet, dessen Fernerkundungsdaten ausgewertet werden sollen,
- eine oder mehrere Randbedingungen (z. B. Preis der Nutzung von Fernerkundungsdaten).

Das Leistungsprofil kann beispielsweise in einer oder mehreren Datenbanken gespeichert sein. Das Leistungsprofil selbst kann dementsprechend als eine Eigenschaft einer Menge von Fernerkundungsdaten oder eines Fernerkundungsdaten-Verarbeitungssystems aufgefasst werden. Unter einem Fernerkundungsdaten-Verarbeitungssystem werden eine Menge von Fernerkundungsdaten und zugehörige Verarbeitungsroutinen verstanden, mit denen die Fernerkundungsdaten zu einem definierten Produkt verarbeitet werden können. Die Menge der Leistungsprofile beschreibt die Möglichkeiten, die bestehen, um die gestellten Anforderungen zu erfüllen.

Bei dem Vergleich des Anforderungsprofüs und des Leistungsprofils ergibt sich der Erfüllungsgrad z. B. aus der Ähnlichkeit (Distanz) zwischen Anforderungs- und Leistungsprofil. Es kann bei dem Vergleich eine Bewertung von Unterschieden in den verglichenen Profilen durchgeführt werden. Dabei werden Unterschiede und Übereinstimmungen in den einzelnen Kategorien in unterschiedlichem Maße gewichtet. Bei der Gewichtung werden insbesondere Präferenzen des Nutzers und/oder von dem Nutzer definierte Gewichte verwendet. Insbesondere werden die Unterschiede entsprechend der Gewichtung kategorieweise auf eine numerische Skala abgebildet, sodass für jede ausgewertete Kategorie ein numerischer Wert gebildet wird, und wird die Summe der numerischen Werte zu einem Gesamtergebnis des Vergleichs addiert. Auf diese Weise erhält man eine Bewertungsgröße.

In die Bewertung der verfügbaren Fernerkundungsdaten oder Fernerkundungsdaten-Verarbeitungssysteme können neben dem Grad der Erfüllung auch zusätzliche Randbedingungen eingehen (z.B. Kosten der Nutzung von Fernerkundungsdaten). Die zu diesen Randbedingungen gehörenden Werte sind z. B. Eigenschaften von alternativen Fernerkundungsdaten oder Erkundungssystemen und werden gemeinsam mit Dateneigenschaften bereitgestellt. Welche Randbedingungen in die Bewertung einfließen können, ist z. B. vordefiniert.

In die Bewertung können sowohl scharfe (zum Beispiel durch einen numerischen Wert definierte) als auch unscharfe Daten (z. B. eine durch einen Begriff wie "hohe Auflösung" oder "niedrige Auflösung" definierte Anforderung) einfließen, insbesondere bei den Randbedingungen aber auch bei den Aufgaben der Aufgabenprofildaten. Insbesondere können zunächst alle unscharfen Daten in scharfe Daten umgewandelt werden und dann die Bewertung durchgeführt werden. Alternativ kann eine so genannte Fuzzy-Bewertungsmethode (englisch: Fuzzy-Logic) angewendet werden. Auf ein Beispiel wird noch anhand der beigefügten Figuren eingegangen.

Insbesondere kann dabei der Grad einer Übereinstimmung einer der Anforderungen (in dem Anforderungsprofil) mit einer der Eigenschaften (in dem Leistungsprofil) in folgender Weise ermittelt werden: möglichen Anforderungen in zumindest einer der Kategorien wird jeweils eine mathematische Funktion (Element) zugeordnet, wobei durch jede der Funktionen möglichen Eigenschaften in dem Leistungsprofil jeweils eine Bewertungszahl zugeordnet ist. Steht eine konkrete Anforderung fest und wird die Anforderung mit einer Eigenschaft in dem Leistungsprofil verglichen, wird der Grad der Übereinstimmung dadurch ermittelt, dass aus der zugeordneten Funktion die Bewertungszahl ermittelt wird und als Grad der Übereinstimmung verwendet wird. Dabei sind die Anforderungen insbesondere unscharf formuliert, d. h. ergeben für eine Mehrzahl von unterschiedlichen Eigenschaften jeweils einen Grad der Übereinstimmung, der nicht Null ist.

Die Automatisierung des Vergleichs von Leistungsprofil und Anforderungsprofil ermöglicht einen Vergleich des Anforderungsprofils mit einer Vielzahl von Leistungsprofilen. Daher können theoretisch unbegrenzt viele Leistungsprofile auf ihre Übereinstimmung mit dem Anforderungsprofil verglichen werden. Oder es kann der Grad ihrer Übereinstimmung ermittelt werden, sodass es möglich ist, das Leistungsprofil mit dem höchsten Grad an Übereinstimmung mit dem Anforderungsprofil zu ermitteln. So kann z. B. eine Rangfolge aller zur Verfügung stehenden Alternativen erstellt werden.

Ferner wird eine Anordnung zur Auswahl von Fernerkundungsdaten vorgeschlagen, insbesondere von Fernerkundungsdaten, die von einem Erdsatelliten aufgenommen wurden, wobei die Anordnung Folgendes aufweist:
- eine Schnittstelle zur Eingabe von Aufgabenprofildaten, die Aufgaben und/oder Ziele einer Nutzung von Fernerkundungsdaten definieren,
- eine Zuordnungseinrichtung, die mit der Schnittstelle verbunden ist und die ausgestaltet ist, automatisch zumindest eine physikalische Dateneigenschaft, insbesondere eine Auflösung, von Fernerkundungsdaten den Aufgabenprofildaten zuzuordnen, sodass zumindest eine Anforderung an die Nutzung von Fernerkundungsdaten definiert ist,
- eine Prüfeinrichtung, die ausgestaltet ist, Dateneigenschaften von verfügbaren Fernerkundungsdaten unter Verwendung der zumindest einen Anforderung zu prüfen,
- eine Feststellungseinrichtung, die ausgestaltet ist festzustellen, ob und/oder bis zu welchem Grad mit den verfügbaren Fernerkundungsdaten die zumindest eine Anforderung erfüllt werden kann,und
- eine Ausgabeeinrichtung, die ausgestaltet ist, ein Ergebnis der Feststellung automatisch auszugeben.
   Von der Erfindung ist ferner ein Computerprogramm zur Auswahl von Fernerkundungsdaten umfasst, wobei Programmcode-Mittel des Computerprogramms ausgestaltet sind, das erfindungsgemäße Verfahren in zumindest einer seiner Ausgestaltungen auszuführen. Insbesondere können die Programmcode-Mittel auf einem computerlesbaren Datenträger gespeichert sein. Weiterhin gehört zum Umfang der Erfindung ein Datenträger und/oder ein Computersystem, auf dem eine Datenstruktur gespeichert ist, die nach einem Laden in einen Arbeits- und/oder Hauptspeicher eines Computers oder Computer-Netzwerkes das Computerprogramm ausführt.

Gemäß dem dritten Aspekt der Erfindung wird ein Verfahren zur automatischen Verarbeitung von Fernerkundungsdaten (insbesondere von Fernerkundungsdaten, die von einem Erdsatelliten aufgenommen wurden) vorgeschlagen, wobei
- die Fernerkundungsdaten als Bildmatrix in einer Satellitenprojektion vorliegen,
- geografische Informationen, die in einer von der Satellitenprojektion abweichenden Projektion oder geografischen Darstellung vorliegen, Bildelementen der Bildmatrix zugeordnet werden.

Unter einer Bildmatrix wird eine örtlich zweidimensionale Matrix mit Bildelementen verstanden, die in der Regel als Rechteckmatrix vorliegt, d. h. in der die Bildelemente in Zeilen und Spalten angeordnet sind.

Das erfindungsgemäße Verfahren kann als inverse Georeferenzierung bezeichnet werden, da im Gegensatz zu der üblichen Georeferenzierung geografische Informationen den Fernerkundungsdaten in der Satellitenprojektion zugeordnet werden. Wenn im Folgenden von "Georeferenzierung" die Rede ist, dann ist die inverse Georeferenzierung gemeint.

Die geografischen Informationen sind insbesondere geografischen Erdkoordinaten zugeordnet oder weisen diese geografischen Erdkoordinaten auf. Unter geografischen Erdkoordinaten werden die üblicherweise für die Positionsbestimmung an der Erdoberfläche verwendeten Koordinaten, nämlich die geografische Länge und die geografische Breite verstanden. Beispielsweise liegen die Erdkoordinaten in einer Zylinderprojektion der Erdoberfläche vor. Anstelle der Erde kann es sich bei dem beobachteten Objekt auch um andere Raumkörper (z. B. Planeten) handeln.

Somit ist es möglich, über die Matrixkoordinaten der Bildmatrix in der Satellitenprojektion auf die geografischen Informationen zuzugreifen. Insbesondere werden die geografischen Informationen derart den Bildelementen der Bildmatrix zugeordnet, dass sie unter Verwendung von Bildkoordinaten (z. B. Zeilennummer und Spaltennummer) der Bildmatrix abrufbar sind.

Bei den geografischen Informationen kann es sich um topografische Informationen handeln.

Die erfindungsgemäße Georeferenzierung hat den Vorteil, dass die in der Satellitenprojektion vorliegenden Daten parallel zu der Georeferenzierung thematisch verarbeitet werden können. Auch die weiterverarbeiteten Daten liegen in der Satellitenprojektion vor. Die Georeferenzierung (d. h. die eigentliche Zuordnung der geografischen Informationen) kann ganz oder teilweise auch nach der Weiterverarbeitung vorgenommen werden. Im Gegensatz zu den oben beschriebenen bekannten Vorgehensweisen ist also eine sequenzielle Datenverarbeitung, die mit der Georeferenzierung beginnt, nicht zwingend erforderlich. Unter den in der Satelliten projektion vorliegenden Fernerkundungsdaten werden daher auch solche weiterverarbeiteten Daten verstanden.

Auch ist es möglich, den Einsatz verschieden empfindlicher Daten-Prozessoren zur Weiterverarbeitung der in der Satellitenprojektion vorliegenden Daten zu steuern. Unter Prozessoren werden verarbeitungstechnische Einheiten mit definierten Funktionen der Datenverarbeitung verstanden. Z.B. kann für eine Detektion von Dunst über Wasser- oder Landflächen ein unterschiedlich empfindlicher Prozessor verwendet werden.

Ein weiterer Vorteil der Erfindung besteht darin, dass die Anzahl der Bildelemente der Bildmatrix durch die Georeferenzierung nicht vergrößert werden muss. Insbesondere können jedem in der Satellitenprojektion vorliegenden Bildelement lediglich seine geografischen Koordinaten zugeordnet werden. Optional kann den Bildelementen jeweils eine zusätzliche geografische Information zugeordnet werden, beispielsweise ein Grauwert, der eine Information über die an dem zugeordneten geografischen Punkt vorhandenen Verhältnisse (z. B. eine Höhe der Erdoberfläche über normal Null, d. h. eine topografische Information) aufweist. Durch beide Zuordnungen vergrößert sich jedoch nicht die Anzahl von Zeilen und Spalten der Bildmatrix. Dagegen finden bei der traditionell durchgeführten Georeferenzierung Operationen statt, bei denen die ursprüngliche Bildmatrix gedreht wird. Somit muss eine entsprechend größere Bildmatrix gespeichert und weiterverarbeitet werden, in der Bereiche von Bildelementen keine Bildinformationen enthalten. Durch die automatische Verarbeitung ist die Handhabung von großen Datenmengen möglich, insbesondere da die Fernerkundungsdaten in einer vollständig besetzten Bildmatrix mit einer gegebenen Spalten- und Zeilenzahl abgelegt sind.

Insbesondere kann die erfindungsgemäße Georeferenzierung Teil eines Verfahrens zur automatischen Qualitätskontrolle von Fernerkundungsdatenmengen sein, z. B. in deren Verarbeitungsprozess. Insbesondere ist es möglich, unterschiedliche Ausgangssituationen bei der Aufnahme der Fernerkundungsdaten zu bewerten. Bei einer Weiterbildung der Erfindung wird nach der Georeferenzierung (z. B. anhand der im Bildbereich liegenden unbewölkten Land- und Wasserflächen) bewertet, wie hoch die Qualität (z. B. Informationsgehalt) der vorliegenden Bilddaten ist. Beispielsweise kann es von Bedeutung sein, die tatsächliche Land-Wasser-Verteilung des mit der Bildmatrix erfassten Gebietes zu bewerten, wobei das erfasste Gebiet z. B. unter einer dichten Wolkendecke und daher die Verteilung a priori nur schwer eingeschätzt werden kann. So kann insbesondere die Nutzbarkeit der Daten für einen bestimmten Zweck festgestellt und/oder bewertet werden.

Die Qualitätsbewertung oder sonstige Weiterverarbeitung kann aber auch mit einer reduzierten Bildauflösung vorgenommen werden, d.h. mit reduzierter Anzahl von Bildelementen.

Bei einer Weiterbildung der Erfindung werden für eine Mehrzahl von Bildelementen der Bildmatrix entsprechende geografische Koordinaten aus den geografischen Informationen ermittelt, so dass ein von der Bildmatrix abgedecktes Beobachtungsgebiet definiert ist. Weiterhin werden dem definierten Beobachtungsgebiet entsprechende geografische Daten transformiert, sodass einander entsprechende geografische Daten und zugehörige Bildelemente der Bildmatrix in dem definierten Beobachtungsgebiet einander zugeordnet werden. Dabei kann bei der Transformation der geografischen Daten insbesondere eine Relativbewegung des Satelliten und eines beobachteten Raumkörpers berücksichtigt werden.

Wenn eine Empfangsstation am Boden die von dem Satelliten aufgezeichneten Signale empfängt, werden üblicherweise zusätzliche Daten generiert, die so genannten Metadaten. Zur Erzeugung der Metadaten werden insbesondere die Zeit der von dem Sensor des Satelliten aufgezeichneten Signale und Informationen über die Bewegungsbahn des Satelliten (Bahndaten) verwendet. Damit können insbesondere Eckkoordinaten (z. B. in dem Koordinatensystem des beobachteten Raumkörpers) eines von dem Satelliten aufgenommenen Bildes und/oder Koordinaten von anderen Bildpunkten berechnet werden. Durch unvorhersehbare Abweichungen von der Bewegungsbahn (z. B. auf Grund von Dichteschwankungen in der Atmosphäre des Raumkörpers) sind diese Koordinaten jedoch häufig fehlerhaft.

Bei einer Ausgestaltung des erfindungsgemäßen Verfahrens können mit Hilfe der in den Metadaten enthaltenen (und/oder daraus berechneten) Koordinaten automatisch (z. B. mit geeigneter Software) Daten einer geografischen Karte in einer geeigneten Größe und Darstellung erzeugt werden. Dabei kann insbesondere der äußere Rahmen des von den Fernerkundungsdaten erfassten Gebietes (Gebiet der Bildmatrix in der Satellitenprojektion) identifiziert werden. Insbesondere in dem Fall, in dem die geografischen Koordinaten aus den Metadaten ermittelt werden (jedoch auch in anderen Fällen), können die geografischen (insbesondere topografischen) Informationen unter Verwendung der Satellitenbahnkoordinaten bei Kenntnis z. B. der Flughöhe des Satelliten, der Sensorgeometrie eines Sensors des Satelliten und der bei der Aufzeichnung der Daten verwendeten Optik in die Satellitendaten übertragen werden. Dabei können erforderliche Transformationsparameter aus der Karte abgeleitet und/oder eine Rotationsbewegung des Raumkörpers beim Überflug des Satelliten berücksichtigt werden.

Es sei an dieser Stelle erwähnt, dass die in den Metadaten enthaltenen Informationen in der Regel auf Vorabrechnungen (unter Verwendung so genannter two-line-Elemente) beruhen.

Das Ergebnis der Transformation kann anschließend z. B. zur Beurteilung der Relevanz von Fernerkundungsdaten für den Nutzer herangezogen werden. Das setzt aber voraus, dass die z. B. den Metadaten entnommenen oder daraus ermittelten Koordinaten korrekt sind und/oder ein entsprechender Fehler identifiziert und korrigiert wurde. Eine Identifizierung des Fehlers ist z. B. aus einem Vergleich mit einem Referenzbild möglich. Bei Fernerkundungsdaten mit hoher Wolkenbedeckung kann dies jedoch nicht in jedem Fall mit Sicherheit geleistet werden.

Bei einer Weiterbildung werden daher korrigierte Informationen über die Relativbewegung des Satelliten und des beobachteten Raumkörpers verwendet. Solche korrigierten Informationen basieren üblicherweise auf einer Messung der tatsächlichen Relativposition des Satelliten zu definierten Zeitpunkten (beispielsweise unter Verwendung eines satellitenbasierten Positions-Bestimmungssystems wie dem GPS oder Galileo) und auf einer nachträglichen Korrektur der im Voraus erwarteten Bahnbewegung oder einer nachträglichen Bestimmung der Bahnbewegung. Insbesondere können dann, wenn eine Korrektur der transformierten geografischen Daten erforderlich ist, mit den korrigierten Informationen über die Relativbewegung wiederum ein von der Bildmatrix abgedecktes Beobachtungsgebiet definiert und eine Transformation der geografischen Daten auf die Bildmatrix durchgeführt werden.

Beispielsweise werden Eckkoordinaten des definierten Beobachtungsgebietes aus den korrigierten Informationen ermittelt und weitere Informationen über die Relativbewegung berücksichtigt. Die weiteren Informationen können insbesondere aus Folgendem berechnet werden bzw. die folgenden Informationen berücksichtigen: eine Äquatordurchgangszeit der Bahnbewegung des Satelliten, die Zeitgleichung, Kleinkreise der Satellitenbewegung, eine Drehbewegung des beobachteten Raumkörpers, Eigenschaften zumindest eines für die Aufnahme der in der Bildmatrix enthaltenen Bildinformationen verwendeten Sensors (z. B. Öffnungswinkel des Erfassungsbereichs) und/oder einer Ausrichtung und/oder Position des Sensors.

Da bei der zuvor beschriebenen Ausgestaltung der Erfindung bekannte geografische Informationen in die Satellitenprojektion überführt werden, ist eine Veränderung des Informationsgehaltes der Bildmatrix ausgeschlossen. Wichtig für die Qualität der Georeferenzierung ist daher die Genauigkeit bei der Identifizierung der bekannten geografischen Informationen. Werden (wie zuvor beschrieben) Qualitätsmängel festgestellt, dann können je nach Fehlerart verschiedene Prozeduren zur Fehlerbehebung angewendet werden, wobei die Prozeduren mit unterschiedlichem Aufwand verbunden sind. Qualität bedeutet (da es sich um eine inverse Georeferenzierung handelt) die Genauigkeit bei der Zuordnung der geografischen Informationen zu den Bildelementen der Bildmatrix in der Satellitenprojektion.

Die hochpräzisen Daten stehen in der Regel jedoch erst einige Tage nach dem Empfang von Satellitendaten zur Verfügung. Eine Qualitätskontrolle, die auch als Datennutzbarkeitsanalyse bezeichnet werden kann und die eine Wolkenbedeckung auswertet, wird z. B. unmittelbar nach dem Datenempfang einsetzen. Dazu können beispielsweise die entsprechenden Bildkoordinaten aus den aktuellen Empfangsparametern der Antenne, aus dem Azimuthwinkel, aus der Elevation und aus der Empfangszeit (unter Berücksichtigung der Äquator-Durchgangszeit des Satelliten und mit Hilfe der Zeitgleichung) abgeleitet werden, um die in den Metadaten enthaltenen Informationen zu kontrollieren und möglicherweise zu korrigieren.

Für die Qualitätskontrolle kann beispielsweise ein Referenzbild verwendet werden, das insbesondere zunächst in den (entzerrten) geografischen Koordinaten der zugeordneten geografischen Informationen vorliegt, also noch nicht in der Satellitenprojektion. Somit liegt eine zweite, redundante Quelle an Informationen vor, die somit eine Qualitätskontrolle ermöglicht. Das Referenzbild liegt beispielsweise zunächst in den Standardkoordinaten (geografische Länge und geografische Breite) des Raumkörpers vor. Es wird in die Satellitenprojektion transformiert. Z. B. durch Zuordnung von gleichen Strukturen in dem Referenzbild und in der Bildmatrix und durch Bestimmung der geografischen Positionen der Strukturen auf Basis der jeweils zugeordneten geografischen Informationen in dem Referenzbild und in der Bildmatrix kann ermittelt werden, ob ein Fehler bei der Zuordnung der geografischen Informationen zu den Bildelementen der Bildmatrix vorliegt und/oder wie groß der Fehler ist. Bei den Strukturen handelt es sich beispielsweise um linienartige Strukturen, Flächenbereiche mit definierten Rändern und/oder punktartige Strukturen.

Ferner wird eine Anordnung zur automatischen Georeferenzierung von Fernerkundungsdaten vorgeschlagen, wobei die Anordnung Folgendes aufweist:
- eine Speichereinrichtung zur Speicherung von Fernerkundungsdaten, die als Bildmatrix in einer Satellitenprojektion vorliegen,
- eine Zuordnungseinrichtung, die mit der Speichereinrichtung verbunden ist und die ausgestaltet ist, geografische Informationen, die in einer von der Satellitenprojektion abweichenden Projektion oder geografischen Darstellung vorliegen, Bildelementen der Bildmatrix zuzuordnen.

Die Zuordnungseinrichtung kann ausgestaltet sein, für eine Mehrzahl von Bildelementen der Bildmatrix entsprechende geografische Koordinaten aus den geografischen Informationen zu ermitteln, so dass ein von der Bildmatrix abgedecktes Beobachtungsgebiet definiert ist. Außerdem ist die Zuordnungseinrichtung ausgestaltet, in dem Beobachtungsgebiet liegenden Bildelementen jeweils geografische Daten zuzuordnen.

Die Zuordnungseinrichtung kann eine Transformationseinrichtung aufweisen, die ausgestaltet ist, einem definierten Beobachtungsgebiet entsprechende geografische Daten unter Berücksichtigung von Bewegungsinformationen über eine Relativbewegung des Satelliten und eines Raumkörpers zu transformieren, sodass geografische Daten und zugehörige Bildelemente der Bildmatrix in dem definierten Beobachtungsgebiet einander zugeordnet werden.

Die Anordnung kann eine Vergleichseinrichtung zum Vergleichen eines ersten Ergebnisses der Zuordnung mit einem zweiten Ergebnis der Zuordnung aufweisen, wobei das erste Ergebnis und das zweite Ergebnis auf geografischen Informationen basieren, die auf unterschiedliche Weise gewonnen wurden. Dies ermöglicht insbesondere einen Vergleich der Ergebnisse. Stellen sich bei dem Vergleich Unterschiede heraus, können die Ursachen für die Unterschiede identifiziert werden und/oder ein Fehler korrigiert werden.

Die Anordnung kann eine Kontrolleinrichtung aufweisen, die ausgestaltet ist, Strukturen in einem Referenzbild und entsprechende Strukturen der Bildmatrix einander zuzuordnen, die jeweiligen geografischen Positionen der einander entsprechenden Strukturen zu bestimmen und miteinander zu vergleichen und daraus einen Fehler bei der Zuordnung der geografischen Informationen zu den Bildelementen zu bestimmen.

Von der Erfindung ist ferner ein Computerprogramm zur automatischen Georeferenzierung von Fernerkundungsdaten umfasst, wobei Programmcode-Mittel des Computerprogramms ausgestaltet sind, das erfindungsgemäße Verfahren in zumindest einer seiner Ausgestaltungen auszuführen. Insbesondere können die Programmcode-Mittel auf einem computerlesbaren Datenträger gespeichert sein. Weiterhin gehört zum Umfang der Erfindung ein Datenträger und/oder ein Computersystem, auf dem eine Datenstruktur gespeichert ist, die nach einem Laden in einen Arbeits- und/oder Hauptspeicher eines Computers oder Computer-Netzwerkes das Computerprogramm ausführt.

Ausführungsbeispiele der Erfindung werden nun anhand der beigefügten Zeichnung beschrieben. Dabei können beliebige einzelne Merkmale oder Kombinationen von Merkmalen der Ausführungsbeispiele mit den zuvor beschriebenen Ausgestaltungen der Erfindung kombiniert werden. Die einzelnen Figuren der Zeichnung zeigen:
- Fig. 1: eine besonders bevorzugte Anordnung mit Modulen zur Verarbeitung von Fernerkundungsdaten,
- Fig. 2: ein konkretes Ausführungsbeispiel für die in Fig. 1 dargestellte Zuordnungseinrichtung,
- Fig. 3: eine besonders bevorzugte Anordnung zur Auswahl von Fernerkundungsdaten
- Fig. 4: ein Flussdiagramm zur Darstellung einer besonders bevorzugten Ausführungsform
- Fig. 5: schematisch eine Zuordnung von physikalischen Dateneigenschaften zu den Aufgabenprofildaten,
- Fig. 6: einen Zusammenhang zwischen geometrischer Auflösung eines Satelliten-Sensors und der zeitlichen Auflösung (Frequenz) bei der Aufnahme von Beobachtungsobjekten,
- Fig. 6A: eine Legende, die in Fig. 5 und Fig. 6 verwendete Zahlen und Abkürzungen erläutert,
- Fig. 7: ein Schema, das eine hierarchische Gliederung von Kriterien darstellt,
- Fig. 8: eine Anordnung zur Verarbeitung von Fernerkundungsdaten, die insbesondere die in Fig. 3 dargestellte Anordnung enthält, und
- Fig. 9: eine Menge von Funktionen, mit denen eine unscharf formulierte Anforderung auf Übereinstimmung mit einer scharf definierten Eigenschaft überprüft werden kann,
- Fig. 10: ein besonders bevorzugtes Ausführungsbeispiel einer erfindungsgemäßen Anordnung ,
- Fig. 11: Beobachtungsgebiete von zwei verschiedenen Überflügen eines Satelliten,
- Fig. 12: schematisch eine Szene in einer Bildmatrix in Satellitenprojektion,
- Fig. 13: schematisch ein Referenzbild, das in die Satellitenprojektion transformiert wurde,
- Fig. 14: ein Flussdiagramm, das die Vorgehensweise bei einem Ausführungsbeispiel für eine Strukturanalyse zur PositionsfehlerBestimmung darstellt, und
- Fig. 15-19: Karten zur Darstellung der Transformation von geografischen Informationen in eine Satellitenprojektion.

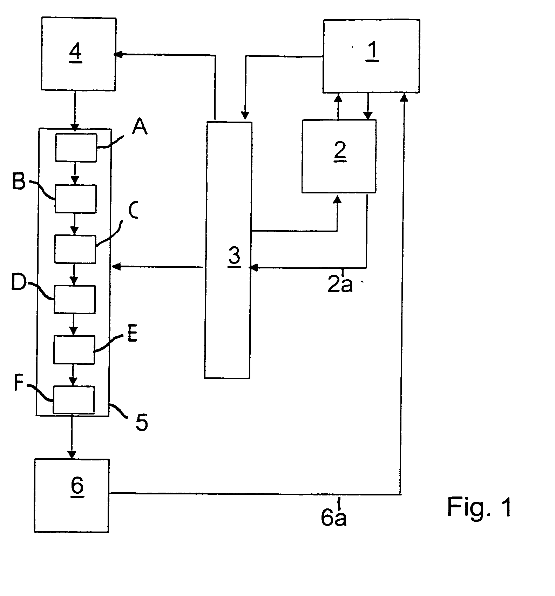

In der in Fig. 1 dargestellten Anordnung ist ein Nutzer mit dem Bezugszeichen 1 bezeichnet. Der Nutzer 1 kann über eine Schnittstelle zu einer Anforderungs-Erzeugungseinrichtung 2 Informationen zu den Zielen, Aufgaben und/oder dem Arbeitsgebiet der Nutzung von Fernerkundungsdaten, zu seiner Person und/oder zu Randbedingungen (d. h. sonstigen Wünschen und Vorgaben) eingeben. Die Anforderungs-Erzeugungseinrichtung 2 erzeugt aus den Informationen Anforderungen an eine Nutzung der Fernerkundungsdaten, wobei die Anforderungen über eine Schnittstelle 2a an eine Verknüpfungseinrichtung 3 ausgegeben werden.

Die gesamte Anordnung, mit Ausnahme des Nutzers 1, kann in Form von Hardware und/oder Software realisiert werden.

Über die Schnittstelle 2a empfängt die Verknüpfungseinrichtung 3 einerseits das Anforderungsprofil. Andererseits kann die Verknüpfungseinrichtung Informationen an die Erzeugungseinrichtung 2 übertragen, z. B. wenn von der Verknüpfungseinrichtung 3 festgestellt wurde, dass eine Anforderung nicht oder nur teilweise erfüllt werden kann. In diesem Fall kann wiederum eine Rückmeldung an den Nutzer 1 ausgegeben werden.

Ferner weist die Anordnung eine Speichereinrichtung 4 auf, die mit der Zuordnungseinrichtung 3 verbunden ist. In der Speichereinrichtung 4 sind die Fernerkundungsdaten gespeichert. In der Speichereinrichtung 4 können auch Fernerkundungsdatenprodukte abgelegt werden, d. h. Ergebnisse einer Verarbeitung der Fernerkundungsdaten.

Bei der Speichereinrichtung 4 kann es sich auch um eine räumlich verteilte Speichereinrichtung mit mehreren Teilspeichern handeln, die insbesondere über ein Datenübertragungsnetz (z. B. das Internet) miteinander verbunden sind. In einer verteilten Speichereinrichtung können außerdem die zur Verfügung stehenden Verarbeitungsroutinen gespeichert sein, insbesondere eine Vielzahl von themabezogenen Verarbeitungsroutinen, von denen eine oder mehrere für jede Verknüpfung von Verarbeitungsroutinen (d. h. zur Erfüllung eines konkreten Anforderungsprofils) ausgewählt werden.

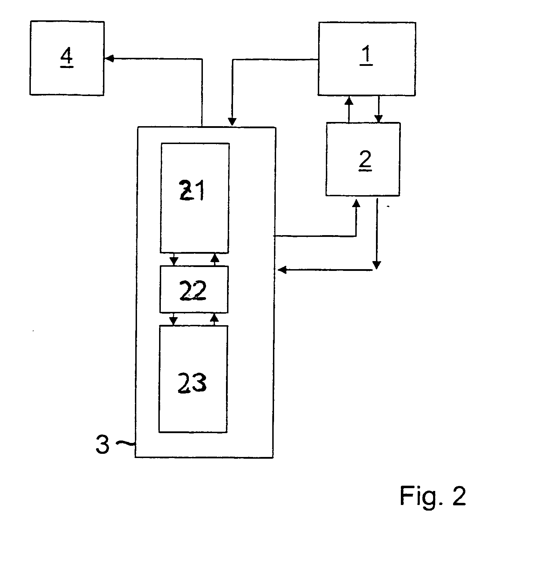

Die Verarbeitungsroutinen sind in dem Ausführungsbeispiel jedoch ganz oder teilweise in einer Speichereinrichtung 22 (siehe Fig. 2) der Verknüpfungseinrichtung 3 gespeichert. Außerdem sind in der Speichereinrichtung 22 folgende Informationen gespeichert:
- Informationen, die Satelliten und/oder Sensoren zur Gewinnung der Fernerkundungsdaten charakterisieren,
- Informationen zu Beobachtungsobjekten oder Beobachtungsbereichen (z. B. Spektren, Oberflächenrauhigkeit), die durch die Fernerkundungsdaten beobachtet werden können,
- Informationen zu den Verarbeitungsroutinen,
- Informationen zur Verknüpfung und/oder Verwendung der Verarbeitungsroutinen.

Die Verknüpfungseinrichtung 3 hat insbesondere die Aufgabe, die Anforderungen auszuwerten, um eine Verknüpfung von Verarbeitungsroutinen zusammenstellen zu können. Von der Zuordnungseinrichtung 3 werden einerseits objektbezogene Eigenschaften (z. B. Spektren oder andere Eigenschaften der Daten) und andererseits auf die Gewinnung der Fernerkundungsdaten bezogene Informationen (z. B. zur geometrischen, zeitlichen und radiometrischen Auflösung von Sensoren) verarbeitet. Das von der Anforderungs-Erzeugungseinrichtung 2 erzeugte Anforderungsprofil wird von einer Transformationseinrichtung 21 (siehe Fig. 2), die mit der Schnittstelle 2a verbunden ist, automatisch in ein Anforderungsprofil mit einer Mehrzahl von technischen Anforderungen an die Nutzung der Fernerkundungsdaten transformiert. Zu den technischen Anforderungen gehören insbesondere die radiometrische Auflösung, die zeitliche Auflösung, die spektrale Auflösung und die geografische Auflösung der Fernerkundungsdaten.

Außerdem erzeugt die Transformationseinrichtung 21 Routinen-Anforderungen, die von den einzelnen ausgewählten Verarbeitungsroutinen zu erfüllen sind. Sie transformiert dabei Nutzer-Anforderungen an die Verarbeitung der Fernerkundungsdaten (z. B. "erstelle eine Karte eines bestimmten Beobachtungsgebietes, in dem Bereiche mit definierter Vegetation visuell erkennbar sind") in technische Anforderungen (z. B. definierte Eingangsgrößen für Verarbeitungsroutinen und Ausgangsgrößen von Verarbeitungsroutinen). Hierzu greift die Transformationseinrichtung 21 insbesondere auf die genannten Informationen zu Beobachtungsobjekten oder Beobachtungsbereichen, auf die Informationen zu den Verarbeitungsroutinen und auf die Informationen zu deren Verknüpfungen und/oder Verwendungen in der Speichereinrichtung 22 zurück.
Es werden dabei reale, d. h. verfügbare oder zukünftig verfügbare Datenbestände in Betracht gezogen.

Beispielsweise kann dabei festgestellt werden, dass die Anforderungen nicht oder nur teilweise erfüllt werden können. Allgemeiner formuliert kann die Verknüpfungseinrichtung 3 ausgestaltet sein, anhand der realen Datenbestände zu prüfen, ob die Anforderungen erfüllt werden können. Diese Prüfung kann sich auch auf die vorhandenen Verarbeitungsroutinen erstrecken. Ist es mit diesen Verarbeitungsroutinen nicht möglich, das Ziel der Verarbeitung der Fernerkundungsdaten zu erreichen, wird dies festgestellt. Z. B. kann dann an den Nutzer eine entsprechende Rückmeldung ausgegeben werden und kann durch Eingabe neuer Informationen das Anforderungsprofil geändert werden.

Von der Verknüpfungseinrichtung 3 geht außerdem ein in der Fig. 1 nach links weisender Pfeil aus, der zu einer Verknüpfung 5 von ausgewählten Verarbeitungsroutinen führt, die in dem Ausführungsbeispiel eine Prozesskette bilden. Durch den Pfeil ist dargestellt, dass die Verknüpfungseinrichtung 3 die Verknüpfung 5 entsprechend den über die Schnittstelle 2a erhaltenen Anforderungen konfiguriert, d. h. aus den vorhandenen Verarbeitungsroutinen zusammenstellt und verknüpft. Hierzu verfügt die Verknüpfungseinrichtung 3 über eine Auswertungseinrichtung 23 zur Auswertung der Anforderungen, die von der Transformationseinrichtung 21 transformiert wurden und die beispielsweise in der Speichereinrichtung 22 abgelegt wurden. Die Auswertungseinrichtung 23 greift wiederum auf die genannten Informationen zu Beobachtungsobjekten oder Beobachtungsbereichen, auf die Informationen zu den Verarbeitungsroutinen und auf die Informationen zu deren Verknüpfungen und/oder Verwendungen in der Speichereinrichtung 22 zurück.

Dabei können unter Umständen Anpassungen an den Schnittstellen der Verarbeitungsroutinen erforderlich sein, die ebenfalls von der Auswertungseinrichtung 23 vorgenommen werden. Eine derartige Konfiguration kann nicht nur bei diesem Ausführungsbeispiel, sondern allgemein von der Verknüpfungseinrichtung vorgenommen werden. Die Verknüpfungseinrichtung 3 kann auch auf die in der Speichereinrichtung 4 gespeicherten Informationen zurückgreifen.

Im Fall einfacher Daten-Produkte reicht es unter Umständen aus, nur wenige Verarbeitungsroutinen miteinander zu verknüpfen. Im Fall komplexer Produkte wird dagegen in der Regel eine Vielzahl von Verarbeitungsroutinen benötigt. Die dargestellte Prozesskette besteht aus insgesamt sechs in Verarbeitungsrichtung der Daten von oben nach unten hintereinander geschalteten Verarbeitungsroutinen A bis F. Dabei bezieht die Verarbeitungsroutine A die für die Verarbeitung erforderlichen Daten (insbesondere Rohdaten, d. h. unmittelbar von einem Sensor erzeugte, hinsichtlich Ihres Informationsgehaltes nicht veränderte Daten) direkt aus der Speichereinrichtung 4. Die in der Reihenfolge der Prozesskette letzte Verarbeitungseinrichtung F gibt das Ergebnis der Verarbeitung an einer Ausgabeeinrichtung 6 aus, die über eine Schnittstelle 6a mit dem Nutzer 1 verbunden ist. Die Erfindung ist jedoch nicht auf eine Prozessketten mit sechs Verarbeitungsroutinen beschränkt. Abhängig von der zu erfüllenden Aufgabe können auch mehr oder weniger Verarbeitungsroutinen miteinander verkettet sein.

Bei den Verarbeitungsroutinen A bis C und F handelt es sich z. B. um Standardverarbeitungsroutinen, etwa um
- eine Verarbeitungsroutine A zur Berücksichtigung der Empfindlichkeit eines Sensors, mit dem die Fernerkundungsdaten aufgenommen wurden (so genannte Kalibration),
- eine Verarbeitungsroutine B zur Korrektur des Einflusses einer Atmosphäre (wobei die Routine beispielsweise wie in der EP 1 091 188 A1 und/oder wie in der noch nicht veröffentlichten deutschen Patentanmeldung, Aktenzeichen 10 2004 024 595.9, beschrieben Daten verarbeitet),
- eine Verarbeitungsroutine C zur Zuordnung von geografischen Informationen zu den Fernerkundungsdaten (so genannte Georeferenzierung oder Entzerrung, wie beispielsweise in der DE 103 54 752 A1 beschrieben),
- eine Verarbeitungsroutine F zur Erstellung der Daten für eine geografische Karte, in der die Ergebnisse der Verarbeitung dargestellt werden.

Auf die in der Aufzählung genannten Druckschriften und auf die noch nicht veröffentlichte Anmeldung wird hiermit vollinhaltlich Bezug genommen.

Bei Verarbeitungsroutine D handelt es sich in dem Beispiel um eine Routine zur Identifizierung von bestimmten Objekten (z. B. definierten Oberflächenbereichen, wie Flächen mit bestimmter Vegetation oder Wasserflächen). Eine derartige Verarbeitungsroutine verarbeitet die Fernerkundungsdaten beispielsweise wie in der DE 199 39 732 A1 und/oder wie in der deutschen Patentanmeldung, Aktenzeichen 103 58 938.4 (noch nicht veröffentlicht) beschrieben, auf deren gesamten Inhalt hiermit Bezug genommen wird. Abhängig davon, ob von der Routine spezifische, für das Ziel der Datenverarbeitung erforderliche Zusatzinformationen benötigt werden, handelt es sich bei dieser Routine um eine themabezogene Verarbeitungsroutine oder nicht. Dabei wird in dem Fall, in dem es sich um eine Standardverarbeitungsroutine handelt, das Ergebnis zur Steuerung themabezogener Verarbeitungsroutinen genutzt. Diese Verarbeitungsroutinen können entsprechend der Steuerung konfiguriert werden, d. h. die Verarbeitung der Fernerkundungsdaten verändert werden. Bei der Steuerung können insbesondere Informationen über das identifizierte Objekt, eine identifizierte geografische Region und/oder über den geografischen Ort bestimmter Bildelemente der Fernerkundungsdaten berücksichtigt werden.

Verarbeitungsroutine E ist eine themabezogene Verarbeitungsroutine, beispielsweise eine Routine zur Identifizierung von Stoff-Konzentrationen von an der Chlorophyllkette beteiligten Stoffen in Wassergebieten. Die Verarbeitungsroutine verarbeitet die Fernerkundungsdaten beispielsweise in folgenden Schritten:
- Einlesen der zu verarbeitenden Fernerkundungsdaten,
- Einlesen von Zusatzinformationen (z. B. charakteristische Spektren), die eine Identifizierung der Stoffe aus den Fernerkundungsdaten ermöglichen; dabei können die Zusatzinformationen von der Verknüpfungseinrichtung 3 und/oder von der Speichereinrichtung 4 zu der Routine übertragen werden,
- Identifizierung der Stoffe durch Verarbeitung der Fernerkundungsdaten und
- Ausgabe der Stoffkonzentrationen, z. B. als eine Bildmatrix, die in der Verarbeitungsroutine F geografischen Informationen zugeordnet werden kann.

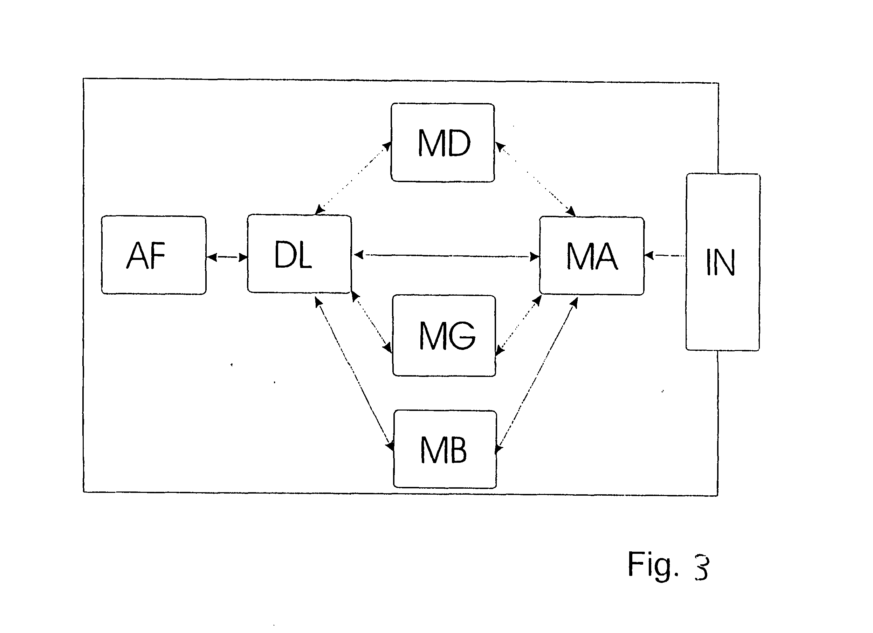

Die in Fig. 3 gezeigte Anordnung weist eine Schnittstelle IN zur Eingabe von Daten und zur Ausgabe von Ergebnissen der Anordnung auf. Über die Schnittstelle IN kann ein Nutzer der Anordnung Informationen eingeben (beispielsweise unter anderem über eine Tastatur) und kann über das Ergebnis informiert werden (beispielsweise über einem Bildschirm und/oder einen Drucker). Die vom Nutzer eingegebenen Informationen werden in der Anordnung insbesondere bei der Erzeugung eines Aufgabenprofils verwendet.

Die Schnittstelle IN ist mit einer Zuordnungseinrichtung MA verbunden, deren Aufgabe die Zuordnung von physikalischen Dateneigenschaften zu den von dem Benutzer eingegebenen Informationen ist. Die Zuordnungseinrichtung MA ist direkt mit einer Speichereinrichtung DL verbunden und außerdem jeweils indirekt über eine Prüfeinrichtung MD, eine Gewichtungseinrichtung MG und eine Bewertungseinrichtung MB mit der Speichereinrichtung DL verbunden. Die Speichereinrichtung DL kann optional außerdem mit einem Archiv AF verbunden sein.

In der Speichereinrichtung DL sind insbesondere Dateneigenschaften von Fernerkundungsdaten und Verarbeitungsroutinen zur Verarbeitung der Fernerkundungsdaten gespeichert. Die Fernerkundungsdaten selbst sind (soweit vorhanden) in dem Archiv AF gespeichert. Alternativ kann auch eine andere Speicherstruktur mit beispielsweise nur einer Speichereinrichtung vorgesehen sein, in der sowohl die Dateneigenschaften, die Daten selbst und die Verarbeitungsroutinen gespeichert sind.

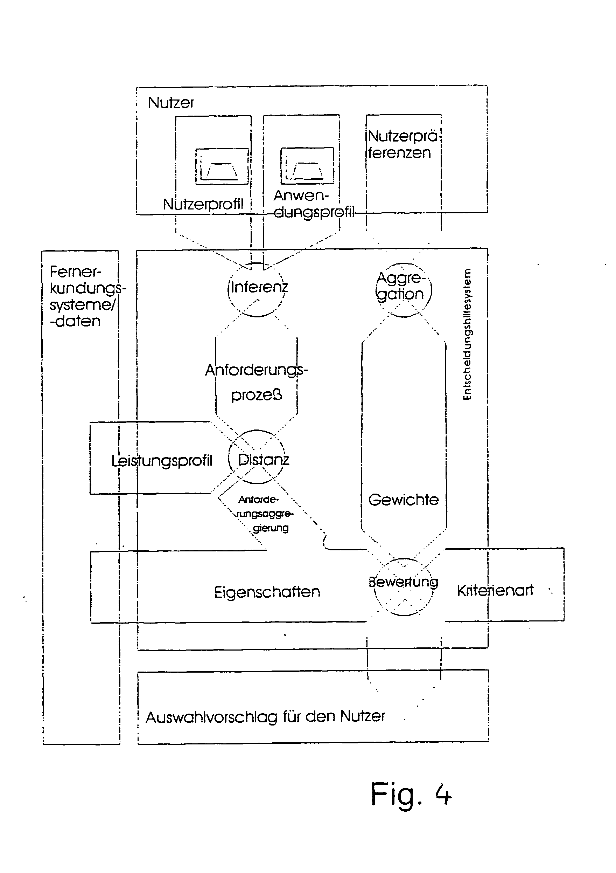

Unter Bezugnahme auf Fig. 3 und auf Fig. 4 wird eine besonders bevorzugte Ausführungsform des erfindungsgemäßen Verfahrens beschrieben.

Anhand einer Reihe von Angaben legt der Nutzer über die Schnittstelle IN fest, für welche Aufgaben die Fernerkundungsdaten genutzt werden sollen. Derartige Angaben sind z.B. die zeitlich räumliche Dynamik eines zu erfassenden Phänomens. Hierzu kann die Schnittstelle IN dem Nutzer eine Maske zur Eingabe der Informationen bereitstellen, die ihm die Eingabe unscharfer Information ermöglicht.

Außerdem kann der Nutzer über die Schnittstelle IN Informationen zu seiner Person eingeben, aus denen in der Schnittstelle IN und/oder in der Zuordnungseinrichtung MA ein Nutzerprofil erstellt werden kann. Weitere Informationen für das Nutzerprofil können auch auf andere Weise gewonnen werden, beispielsweise durch Zugriff auf bereits gespeicherte Informationen über den Nutzer, die beispielsweise in der Speichereinrichtung DL abgelegt sind. Es kann für einen Nutzer (z. B. interaktiv im Dialog mit dem Nutzer) ein individuelles Nutzerprofil erstellt und gespeichert werden, das z. B. Informationen zu dem bevorzugten Anwendungsgebiet von Fernerkundungsdaten, Kenntnisse aus früheren Anfragen, geographische und/oder zeitliche Auflösung und Randbedingungen aufweist. Durch Verwendung des gespeicherten Nutzerprofils kann für die Zukunft eine Vorauswahl von Kriterien und Datenattributen getroffen werden.

Auf das Nutzerprofil kann jedoch auch verzichtet werden, beispielsweise wenn es sich um einen erfahrenen Nutzer handelt. In diesem Fall wird das Nutzerprofil z. B. von dem Nutzer oder von der Anordnung deaktiviert. In diesem Fall wird das Aufgabenprofil als von einem erfahrenen Nutzer erstelltes Profil angenommen und wird dies bei der Auswahl von Fernerkundungsdaten berücksichtigt.

Der Nutzer kann bereits eine Einordnung der von ihm eingegebenen Informationen in vorgegebene Kriterien vornehmen. Zum Beispiel kann er mit den Informationen zu den Aufgaben eine zeitliche und/oder räumliche Auflösung der zu nutzenden Fernerkundungsdaten vorgeben.

Weiterhin kann der Nutzer Präferenzen über die Schnittstelle IN eingeben, durch die er Gewichte für die Bewertung während des Auswahlprozesses festlegt. Insbesondere kann so das Gewicht von Randbedingungen festgelegt werden (wie z.B. Kosten bei der Nutzung der Fernerkundungsdaten, Datenverfügbarkeit, Zeitraum der Bereitstellung von Fernerkundungsdaten, Genauigkeit und/oder Qualität der Daten, Mindestgrad der Erfüllung der durch den Nutzer definierten Aufgaben mit dem Auswahlergebnis).

In der Zuordnungseinrichtung MA können das Aufgabenprofil und das Nutzerprofil miteinander kombiniert werden und werden die physikalischen Dateneigenschaften zugeordnet, sodass ein Anforderungsprofil erzeugt wird. Das Anforderungsprofil beschreibt die vom Fernerkundungsdaten-Verarbeitungssystem (bzw. den Fernerkundungsdaten) zu erfüllenden Anforderungen.

Bevorzugtermaßen werden die Angaben des Nutzers für das Aufgabenprofil und für das Nutzerprofil auf Konsistenz geprüft, sodass die Anordnung mit dem Nutzer interaktiv Unstimmigkeiten abklären kann und/oder auf Wunsch ein korrigiertes Aufgabenprofil erstellen kann.

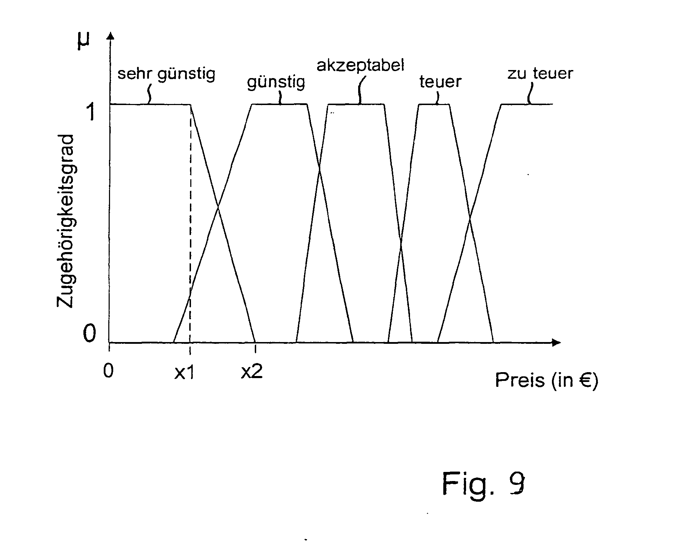

Die Zuordnungseinrichtung MA verwendet bei der Kombination vorzugsweise die Methode der Inferenz. Dabei werden unscharfe oder scharfe Werte mit Hilfe von vordefinierten Regeln verarbeitet, wie unter Bezugnahme auf Fig. 9 an Hand eines Beispiels noch erläutert wird. Der Nutzer gibt dazu z. B. Informationen ein, sodass Worte als Werte linguistischer Variablen definiert sind. Die linguistischen Variablen können dann z. B. durch unscharfe Elemente in den Profilen wiedergegeben werden.

Im Fall der Erstellung der Regeln durch einen Experten können die Regeln anhand von Beispielen (zum Beispiel Trainingsszenarien) überprüft und u.U. iterativ angepasst werden. Es kann beispielsweise ein neuronales Netz mit einer Vielzahl von neuronal verknüpften Fuzzy-Logic-Knoten verwendet werden, das trainiert werden muss und nicht von vornherein ein eindeutig bestimmtes Ergebnis liefert, wenn definierte Eingangsdaten verwendet werden. Wenn der Nutzer dagegen scharf formulierte Anforderungen eingibt, die keine Alternativen zulassen, steht das Ergebnis von vornherein fest.
Nun wird von der Prüfeinrichtung MD zumindest ein in der Speichereinrichtung DL gespeichertes Leistungsprofil mit dem Anforderungsprofil der Zuordnungseinrichtung MA verglichen. Vorzugsweise wird eine Vielzahl von Leistungsprofilen mit dem Anforderungsprofil verglichen. Die Menge der Leistungsprofile beschreibt die Möglichkeiten, die bestehen, um Anforderungen zu erfüllen. Als Ergebnis kann die Prüfeinrichtung MD beispielsweise über die Zuordnungseinrichtung MA und die Schnittstelle IN (oder über eine andere Schnittstelle) an den Nutzer zurück liefern, dass die Anforderung mit dem Leistungsprofil ganz oder teilweise erfüllt werden. Insbesondere ergibt sich ein Grad der Erfüllung aus der Ähnlichkeit (Distanz) zwischen Anforderungs- und Leistungsprofil. Es ist auch denkbar, dass aus Leistungsprofilen eine optimierte Lösung zurückgeliefert wird (siehe dazu im Folgenden die Beschreibung der Bewertungseinrichtung MB)

Die Gewichtungseinrichtung MG führt beispielsweise (wie bereits beschrieben wurde) einen paarweisen Vergleich von Eigenschaften durch, die in einander entsprechenden Kategorien der Profile abgelegt sind.

Die Bewertungseinrichtung MB untersucht und bewertet das Leistungsprofil bzw. die Leistungsprofile unter Berücksichtigung des Anforderungsprofils. In die Bewertung der vorhandenen Fernerkundungsdaten-Verarbeitungssysteme gehen neben dem Grad der Erfüllung vorzugsweise auch die Randbedingungen ein. Zu diesem Zweck können die Randbedingungen als Bestandteile der Profile betrachtet werden, sodass z. B. eine oder mehrere Kategorien in den Profilen die Randbedingungen wiedergeben. Es kann festgeschrieben sein, welche Randbedingungen in die Bewertung einfließen können. Anhand des Bewertungsergebnisses kann eine (nach dem Grad der Übereinstimmung geordnete) Rangfolge aller zur Verfügung stehenden Leistungsprofile bzw. eine Rangfolge der durch das Leistungsprofil definierten Fernerkundungsdaten oder Fernerkundungsdaten erstellt werden.

Durch hierarchische Staffelung der Kriterien wird die Komplexität der Anfrage minimiert und eine Gewichtung der Kriterien erreicht.

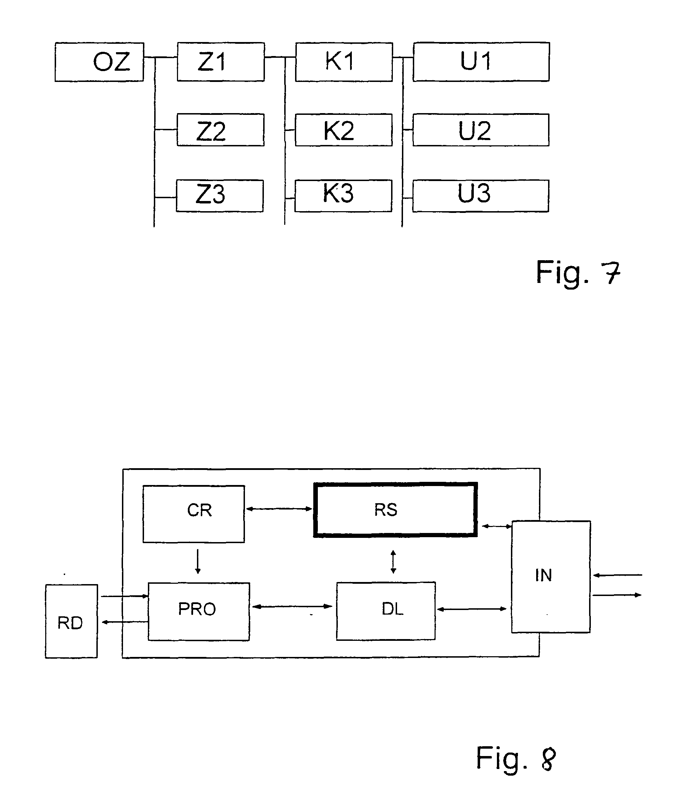

Durch eine hierachische Staffelung von Auswahlkriterien, kann die Komplexität der Eingabe für den Nutzer herabgesetzt und eine Gewichtung der Kriterien erreicht werden. Die Anordnung kann auf Klassifizierungen von Dateneigenschaften zurückgreifen, die eine Zuordnung der Eigenschaften zu den Auswahlkriterien ermöglichen. Fig. 7 zeigt ein Beispiel für den hierarchischen Aufbau. Das Gesamtziel der Datennutzung ist mit Block OZ dargestellt. Das Gesamtziel kann eines oder mehrere Teilziele Z1, Z2, Z3 usw. umfassen. Für jedes der Teilziele Z1, Z2, Z3 usw. sind Kriterien K1, K2, K3 usw. definiert, für die jeweils wiederum Unterkriterien U1, U2, U3 usw. definiert sind. Dies ermöglicht es dem Nutzer, einzelne Unterkriterien anzugeben, sodass das Gesamtziel daraus ableitbar ist. Die Ergebnisse der Abfrage der Unterkriterien können dann zusammengefasst werden und ein Gesamtergebnis festgestellt werden, das es erlaubt, das Gesamtziel zu beschreiben. Dabei können vom Nutzer vorgegebene Gewichte der Kriterien berücksichtigt werden.

Durch eine Abbildung der Nutzeranforderungen auf eine Matrix (mit in Zeilen und in Spalten geordneten Matrixelementen, die als Zielerreichungsmatrix bezeichnet werden kann) können bei einer bevorzugten Ausgestaltung die durch die vom Nutzer eingegebenen Informationen definierten Anforderungen mathematisch verarbeitet werden. Durch eine Bewertung dieser Matrix mit Hilfe der MADM-Methode (Multiple Attribute Decision Making Method) wird neben der Plausibilitätsprüfung eine Objektivierung der Anfrage ermöglicht. Die MADM-Methode wird z. B. in Zimmermann, H.-J.; Gutsche, L. (1991): "Multi-Criteria Analyse - Einführung in die Theorie der Entscheidungen bei Mehrfachzielsetzungen", Springer-Verlag, Berlin, Heidelberg, New York, London, Paris, Tokyo, Hong Kong, Barcelona, Budapest.-ISBN 3-540-54483-6 (Berlin), ISBN 0-387-54483-6 (New York) beschrieben. Auf die Teile dieser Veröffentlichung, die die MADM-Methode beschreiben, wird hiermit vollinhaltlich Bezug genommen.

Mit einer Zielerreichungsmatrix (die insbesondere wie oben beschrieben auf Konsistenz der vom Nutzer eingegebenen Informationen bzw. Kriterien überprüft worden ist) kann dann durch die Anordnung eine Anfrage an die Speichereinrichtung DL ausgelöst werden, ob ein entsprechendes Leistungsprofil vorhanden ist.
Die vorgestellte Lösung ermöglicht einen leichterer Zugriff auf Fernerkundungsdaten und stellt eine wesentliche Vereinfachung der Suche dar. Damit ergibt sich auch eine verbesserte Ausnutzung vorhandener Daten.

Gemäß der MADM-Methode werden die in dem Anforderungsprofil definierten Kriterien bzw. Eigenschaften entsprechend ihrer (vom Nutzer vorgegebenen) Gewichtung untereinander und im Hinblick auf die Zielvorgabe verglichen. Insbesondere wird ein Eigenvektor der Zielerreichungsmatrix gebildet und wird unter Verwendung des Eigenvektors die Konsistenz der von dem Nutzer vorgegebenen Kriterien überprüft. Optional können die Kriterien korrigiert werden. Das Ziel kann in Form eines Vektors beschrieben werden, dessen Elemente den Kriterien entsprechen, sodass durch Vergleich des Eigenvektors mit dem Zielvektor ein Abstandsvektor ermittelt werden kann. Beispielsweise durch Bildung des Betrages des Abstandsvektors werden der Abstand und damit ein Maß für den Grad ermittelt, mit dem das Ziel mit den Kriterien erreicht werden kann.

Die Anwendung der MADM-Methode zur Aufstellung und Bewertung einer Zielerreichungsmatrix erleichtert die Entscheidungsprozesse und ermöglicht die Objektivierung der Anforderungen durch Anwendung von Expertenwissen. Das Expertenwissen muss jedoch nicht beim Nutzer vorhanden sein, sondern ist bereits vorher eingeflossen. Mit der Methode wird eine höhere Übereinstimmung gefundener Daten mit den Erwartungen der Nutzer realisiert. Die beschriebene Ausgestaltung stellt so eine Schnittstelle zum Datenverwaltungssystem dar, das auf der Basis der MADM-Methode das jeweilige Anforderungsprofil des Nutzers möglichst gut mit den die Daten beschreibenden Eigenschaften abgleicht.

Von der Anordnung können (z. B. gemäß dem Bewertungsergebnis geordnet) die am besten geeigneten Fernerkundungsdaten-Verarbeitungssysteme bzw. Fernerkundungsdaten für das ermittelte Anforderungsprofil und die gegebenen Randbedingungen ausgegeben werden. Zusätzlich kann der Nutzer über mögliche Abweichungen zwischen Aufgabenprofil und Anforderungsprofil bzw. gewähltem Leistungsprofil informiert werden und/oder über geeignete Alternativen informiert werden.

Weist die Anordnung das Archiv AF auf, in dem Fernerkundungsdaten gespeichert sind, die dem Anforderungsprofil am besten entsprechenden Fernerkundungsdaten automatisch ausgegeben werden und/oder können die am besten entsprechenden Verarbeitungsroutinen automatisch aufgerufen werden. Dadurch ist es möglich, automatisch einen Verarbeitungsauftrag zu generieren und die Fernerkundungsdaten zu verarbeiten.

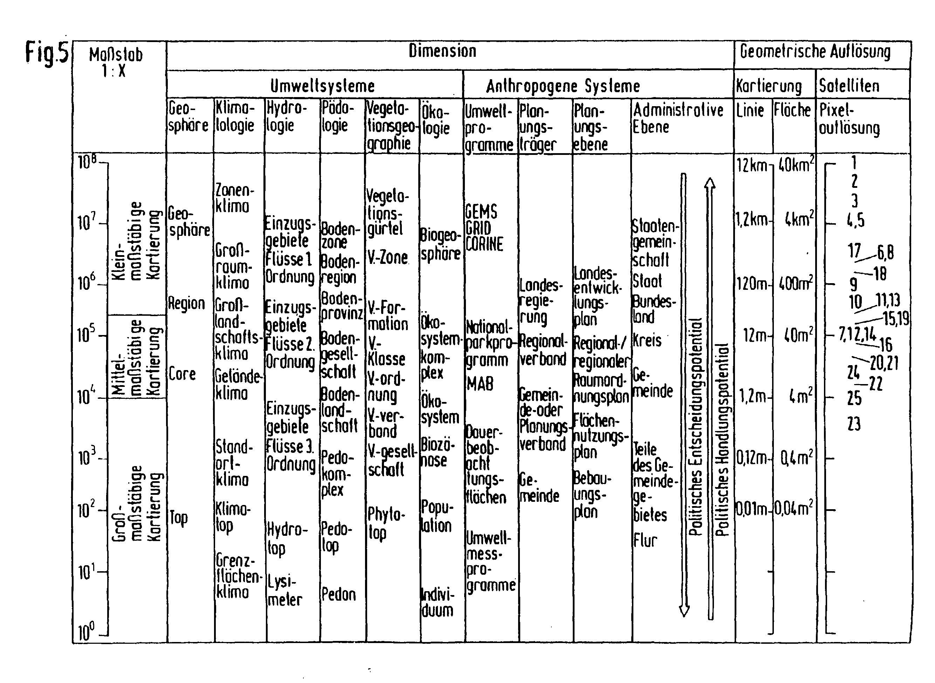

Fig. 5 zeigt ein Beispiel für die Zuordnung von physikalischen Dateneigenschaften (hier: der geometrischen Auflösung) zu den Aufgabenprofildaten (hier: Arbeitsgebiete bzw. Arbeitssituationen, für die die Fernerkundungsdaten genutzt werden sollen). Der geometrischen Auflösung zugeordnet sind in der Figur Themengebiete bzw. Arbeitsgebiete in der breiten mittleren Spalte, die mit "Dimension" überschrieben ist und die in mehrere Spalten unterteilt ist. Die geometrische Auflösung der Fernerkundungsdaten ist in der Figur durch die rechte, mit "Pixelauflösung" überschriebene Spalte wiedergegeben. Dabei sind die Zahlen in dieser Spalte Fußnoten, die jeweils einem Satelliten und/oder einem Sensor eines Satelliten zugeordnet sind. Dieser Sensor bzw. dieser Satellit liefert Fernerkundungsdaten mit der geometrischen Auflösung. Werden also beispielsweise Fernerkundungsdaten für den Arbeitsbereich "Umweltsysteme im Bereich der Klimatologie" mit der Thematik "Geländeklima" benötigt, findet man die Fernerkundungsdaten mit geeigneter geometrischer Auflösung, indem man waagerecht auf derselben Höhe wie der Begriff "Geländeklima" in der rechten Spalte "Pixelauflösung" die Fußnoten ermittelt, hier z.B. 24 (Satellit IKONOS mit Sensor "MS", d. h. multispektral). Eine geeignete geometrische Auflösung (nämlich eine bessere geometrische Auflösung) liefern auch alle Satelliten bzw. Sensoren, deren Fußnote in der rechten Spalte unterhalb der gefundenen Fußnote steht.

Gibt der Benutzer also als Arbeitsgebiet "Umweltsysteme im Bereich der Klimatologie" mit der Thematik "Geländeklima" ein, wird eine lineare geometrische Auflösung von 4m und/oder eine flächenmäßige geometrische Auflösung von 10m² dieser Information zugeordnet und in das Anforderungsprofil übernommen. Diese Auflösungen kann man in der Spalte "Kartierung" in Fig. 5 ablesen. In der Figur sind in der linken Spalte noch verschiedene Kartenmaßstäbe logarithmisch aufgetragen, die den geometrischen Auflösungen entsprechen.

Für die Auswahl geeigneter Fernerkundungsdaten ist neben der geometrischen Auflösung der Fernerkundungsdaten insbesondere auch die zeitliche Auflösung der Daten von Bedeutung. Sie entscheidet über die Frage, ob die Gewinnung aktueller Daten zeitnah zum beobachteten Prozess realistisch gestaltet werden kann. Zudem kann das physikalische Potenzial des Sensors zur Erfüllung der Aufgabe hinterfragt werden und/oder simuliert werden.

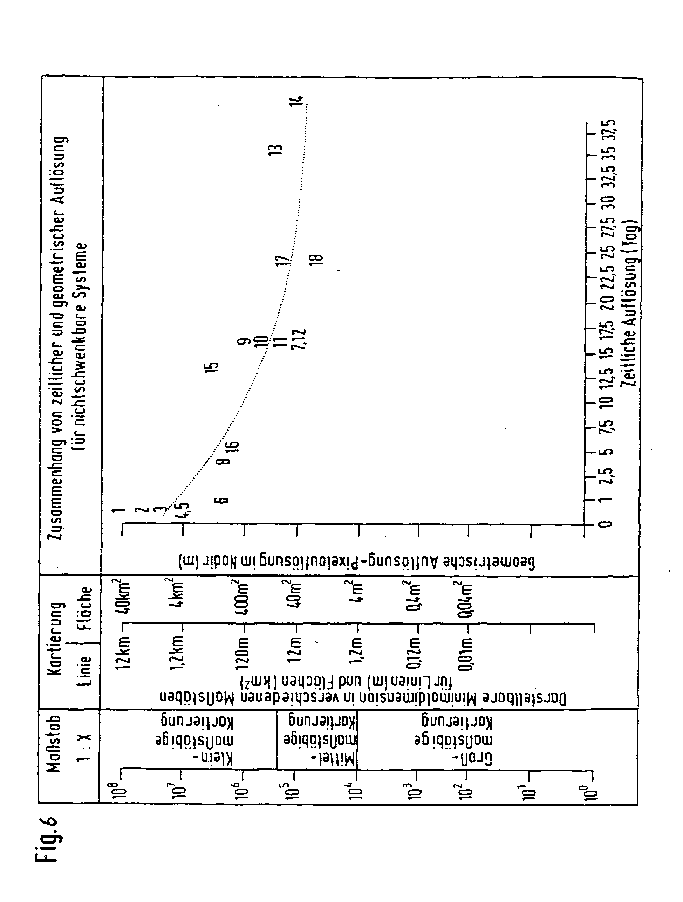

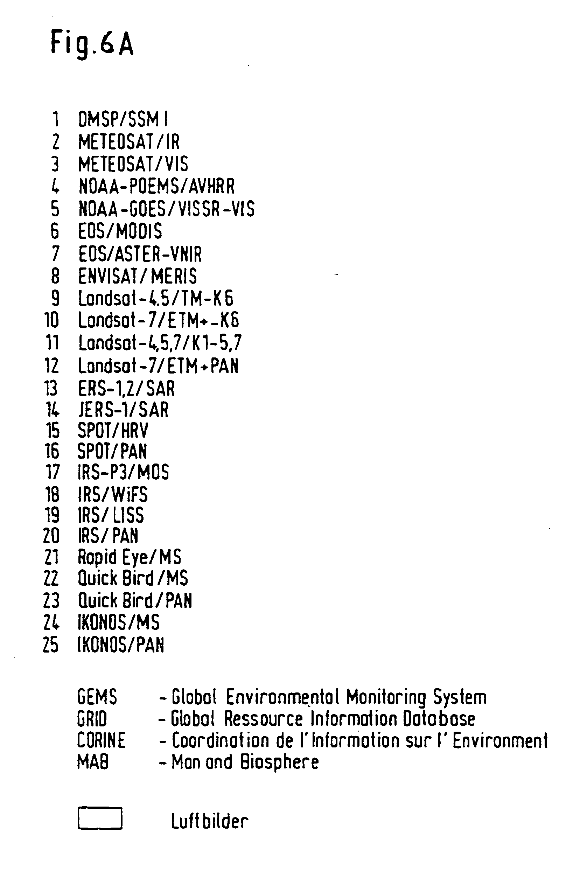

In der Fig. 6 wird der Zusammenhang zwischen geometrischer Auflösung von Sensoren und der zeitlichen Bereitstellung von Daten dargestellt. Zum Verständnis wird darauf hingewiesen, dass ein Satellit erst nach einer gewissen Zeit (Periodendauer) wieder dieselbe Relativposition zu einem bestimmten Punkt auf der Erdoberfläche erreicht. Daher kann auch erst nach der Periodendauer wieder derselbe Beobachtungsbereich aus demselben Blickwinkel beobachtet werden. Allerdings ist es möglich, dass ein Teil des Beobachtungsbereichs bereits früher von dem Satelliten wieder beobachtet werden kann, jedoch aus einem anderen Blickwinkel und/oder als Teil eines anderen Beobachtungsbereichs.

In Fig. 6 ist auf der waagerechten Koordinatenachse die Periodendauer verschiedener Satelliten in Tagen aufgetragen. Die Periodendauer ist hier als zeitliche Auflösung definiert. Wiederum sind die in dem Diagramm eingetragenen Zahlen als Fußnoten zu verstehen, die auf Satelliten bzw. Sensoren von Satelliten hinweisen. Die Angabe der Periodendauer schließt jedoch nicht aus, dass bei der Auswahl der Fernerkundungsdaten bzw. Fernerkundungsdaten-Verarbeitungssysteme auch die Tatsache berücksichtigt wird, dass ein Teil eines Beobachtungsbereichs u. U. früher als nach Ablauf der Periodendauer wieder von demselben Sensor oder Satelliten beobachtet werden kann.

Man erkennt aus Fig. 6, dass die von den Satelliten bzw. Sensoren erreichte geometrische Auflösung näherungsweise in einem funktionalen Zusammenhang zu der zeitlichen Auflösung steht. Der funktionale Zusammenhang ist durch die punktierte Linie dargestellt, die mit zunehmender Periodendauer zu kleineren Werten der geometrischen Auflösung abnimmt. D. h. mit zunehmender Periodendauer wird die geometrische Auflösung feiner. Vorzugsweise wird auch dieser Zusammenhang bei der Auswahl von Fernerkundungsdaten ausgenutzt. Insbesondere kann anhand des Zusammenhanges, wie oben beschrieben die Konsistenz der von dem Nutzer eingegebenen Informationen überprüft werden. Es können also Widersprüche in diesen Informationen aufgedeckt werden, d. h. es kann z. B. eine unvernünftig feine vom Nutzer geforderte geometrische Auflösung entdeckt werden.

Gemäß dem oben beschriebenen Zusammenhang nimmt bei einer Erhöhung der räumlichen Auflösung (Pixelauflösung) in aller Regel die Breite des abtastbaren Bildstreifens an der Erdoberfläche (Schwad) ab, sodass eine geringere Flächenabdeckung erreicht wird. Um dennoch flächendeckend Daten aufzeichnen zu können, muss eine höhere Zahl von Umläufen des Satelliten realisiert werden. Dieses inverse Verhalten von geometrischer und zeitlicher Auflösung ist durch die punktierte Linie dargestellt. Das Problem mit dem inversen Verhalten bezüglich eines Satelliten kann unter Umständen dadurch umgangen werden, dass Daten vergleichbarer Satelliten (z. B. Satelliten mit einem Sensor, der gleichartige Daten liefert) verwendet werden. In naher Zukunft werden dazu sogar gleichzeitig mehrere identische Satelliten gestartet. Derartige Konstellationen von Satelliten und den damit aufgenommenen Fernerkundungsdaten können dann bei dem erfindungsgemäßen Verfahren berücksichtigt werden.

Wiederum sind in Fig. 6 die Spalten "Kartierung" und "Maßstab" eingetragen.

Die in Fig. 8 gezeigte Anordnung zur Verarbeitung von Fernerkundungsdaten weist z. B. die in Fig. 3 dargestellte Schnittstelle IN und die in Fig. 3 dargestellte Speichereinrichtung DL auf. Mit RS ist eine Einrichtung bezeichnet, die eine weitere, anhand von Fig. 3 bereits beschriebene Auswahl von Fernerkundungsdaten oder von Fernerkundungsdaten-Verarbeitungssystemen ausführen kann. Zum Beispiel kann die Einrichtung RS die Zuordnungseinrichtung MA, die Prüfeinrichtung MD, die Bewertungseinrichtung MB und die Gewichtungseinrichtung MG aufweisen. Weiterhin ist eine Steuereinrichtung CR zum Steuern der Verarbeitung von Fernerkundungsdaten und zum Steuern der Auswahl der Fernerkundungsdaten bzw. -systeme vorgesehen. Die Steuereinrichtung CR ist mit der Einrichtung RS und mit einer Anordnung PRO zum Verarbeiten der Fernerkundungsdaten verbunden. Die Anordnung PRO ist wiederum mit einer Schnittstelle oder Speichereinrichtung RD verbunden, von der die Anordnung PRO Fernerkundungs-Rohdaten zur Weiterverarbeitung erhält.

Beim Betrieb der gesamten in Fig. 8 dargestellten Anordnung wird zunächst, beispielsweise wie anhand von Fig. 3 und Fig. 4 beschrieben, eine Auswahl eines Fernerkundungsdaten-Verarbeitungssystems getroffen. Informationen über die Auswahl werden von der Einrichtung RS an die Steuereinrichtung CR übertragen. Beispielsweise kann das ausgewählte Leistungsprofil außerdem von der Speichereinrichtung DL an die Anordnung PRO übertragen werden. Die Steuereinrichtung CR steuert den Betrieb der Anordnung PRO derart, dass die Fernerkundungsdaten gemäß dem ausgewählten Fernerkundungsdaten-Verarbeitungssystem von der Anordnung PRO verarbeitet werden. Dabei kann die Anordnung PRO entsprechende Rohdaten von der Schnittstelle bzw. Speichereinrichtung RD anfordern. Insbesondere weist die Anordnung PRO eine Kette von Verarbeitungsroutinen zur Verarbeitung der Rohdaten auf, wobei die bereits vorher existierenden Verarbeitungsroutinen gemäß dem ausgewählten Fernerkundungsdaten-Verarbeitungssystem miteinander kombiniert werden.

Wie bereits beschrieben wurde, können bei der Bewertung der verfügbaren Fernerkundungsdaten oder Fernerkundungsdaten-Verarbeitungssysteme auch unscharfe Eigenschaften von Daten und/oder unscharfe Randbedingungen (wie z. B. der Preis der Nutzung von Fernerkundungsdaten) berücksichtigt werden. Bei einer Ausführungsform der Bewertung kann eine so genannte Fuzzy-Bewertungsmethode mit einer "unscharfen Logik" (englisch: Fuzzy-Logic) angewendet werden.

Bei der Fuzzy-Logik werden als Eingangsgrößen linguistische Variablen verwendet. Darunter werden Variablen verstanden, deren Werte keine Zahlen (wie bei deterministischen Variablen) oder statistische Verteilungen (wie bei Zufallsvariablen) sind, sondern sprachliche bzw. linguistische Konstruktionen (auch Terme genannt). Diese Terme werden unscharfen Elemente einer Menge von Elementen zugeordnet bzw. durch diese Elemente repräsentiert. Die Elemente können auch als unscharfe Werte-Funktionen einer Basisvariablen bezeichnet werden.

Ein Ausführungsbeispiel wird nun an Hand der Randbedingung "Preis" beschrieben. Es ist auf andere Basisvariablen, nämlich Randbedingungen und/oder physikalische Eigenschaften der Fernerkundungsdaten übertragbar. Handelt es sich um eine physikalische Eigenschaft (z. B. um die geometrische Auflösung) kann sogar auf eine Eingabe eines scharfen Wertes (z. B. 30 m) durch den Nutzer ein Wertebereich (20-40 m) oder eine unscharfe Angabe (z. B. wiederum ein linguistischer Wert wie "hohe Auflösung") als Anforderung zugeordnet werden. Es wird somit eine Unschärfe erzeugt, die den Vorteil hat, dass nun auch von dem scharfen Wert abweichende Eigenschaften (z. B. 40 m) in dem Leistungsprofil zu dem Ergebnis führen, dass die Anforderung erfüllt oder zumindest zu einem bestimmten Grad erfüllt ist.

In dem Ausführungsbeispiel weist die Basisvariable "Preis" fünf unscharfe Elemente auf, die den Zugehörigkeitsgrad µ einer linguistischen Preis-Aussage mathematisch beschreiben (siehe z. B. Fig. 9: "sehr günstig", "günstig", "akzeptabel", "teuer" und "zu teuer"). Die Elemente sind jeweils Funktionen, die den Zugehörigkeitsgrad der jeweiligen linguistischen Aussage zu Werten auf einer Preisskala beschreiben.

Die Elemente weisen jeweils in einem Wertebereich der Preisskala konstant den Wert 1 auf. Von diesem Wert 1 nehmen die Elemente stetig (z. B. linear) auf Null ab. Dabei nehmen die Randelemente (in Fig. 9: "sehr günstig" und "zu teuer") nur einseitig stetig auf Null ab, während die mittleren Elemente beidseitig stetig auf Null abnehmen. Der Wertebereich mit dem Wert 1 und die stetige (d. h. insbesondere nicht sprungartige) Abnahme drücken die Unschärfe der Zugehörigkeit einer Preisaussage zu einem Preis aus. Keines der Elemente überlappt ein anderes Element, so dass der Wertebereich beider Elemente in dem Überlappungsbereich den Wert 1 hat. Dies kann jedoch bei anderen Ausgestaltungen des Verfahrens der Fall sein.

Durch die Vorgabe der linguistischen Aussage "sehr günstig" durch den Nutzer wird das entsprechende Element als Eigenschaft des Preises für das Anforderungsprofil ausgewählt. Steht nun bei einem Vergleich der Eigenschaft ein bestimmter Preis in dem Leistungsprofil gegenüber, kann aus dem Element der Zugehörigkeitsgrad für diesen Preis festgestellt und als Gewicht interpretiert werden. Ist der Zugehörigkeitsgrad 1 (im Beispiel von Fig. 9 für den Preisbereich von 0 bis x1), besteht volle Übereinstimmung. Im Bereich der stetigen Abnahme oder Zunahme des Zugehörigkeitsgrades liegt der Zugehörigkeitsgrad zwischen 0 und 1 (im Beispiel von Fig. 9 für den Preisbereich von x1 bis x2). Bei einem Preis in diesem Bereich wird die Übereinstimmung folglich mit dem zwischen 0 und 1 liegenden Zugehörigkeitsgrad bewertet. Dort, wo der Preis den Zugehörigkeitsgrad 0 hat, besteht keine Übereinstimmung, d. h. die Anforderung ist nicht erfüllt.

Die Elemente können vorgegeben sein und/oder es können durch den Nutzer Eigenschaften der Elemente eingegeben werden. Die Elemente müssen nicht (wie in Fig. 9 gezeigt) konstante Wertebereiche des Zugehörigkeitsgrades aufweisen.

Vielmehr sind beliebige andere Gestaltungen der Elemente möglich, die jedoch vorzugsweise jedem Wert der Basisvariablen eindeutig den Zugehörigkeitsgrad (das Gewicht) zuordnen.

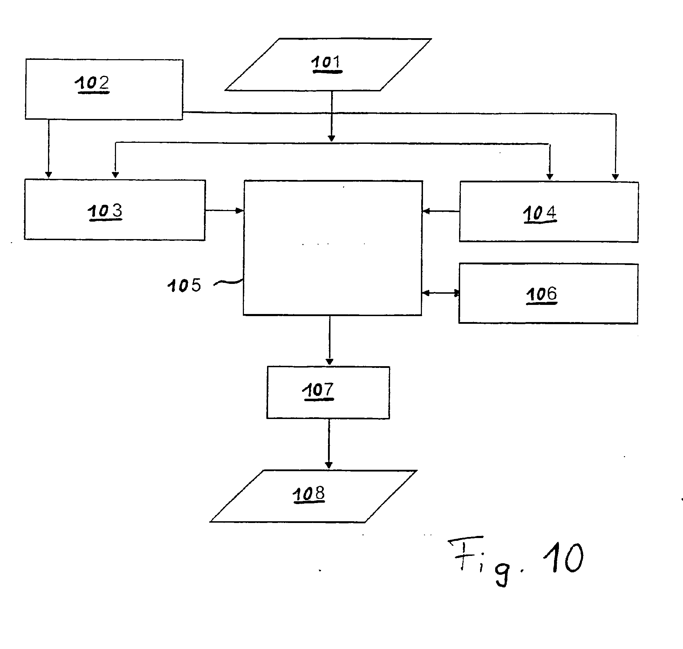

Die in Fig. 10 gezeigte Anordnung weist eine Schnittstelle 101 zur Eingabe von Daten auf, die mit einer ersten Zuordnungseinrichtung 103 und mit einer zweiten Zuordnungseinrichtung 104 verbunden ist. Eingangsseitig sind die Zuordnungseinrichtungen 103, 104 mit einer Speichereinrichtung 102 zur Speicherung von Fernerkundungsdaten verbunden. Ausgangsseitig sind die Zuordnungseinrichtungen 103, 104 mit einer Vergleichseinrichtung 105 verbunden, die wiederum mit einer Korrektureinrichtung 106 verbunden ist. Ausgangsseitig ist die Vergleichseinrichtung 105 mit einer optional vorhandenen Karteneinrichtung 107 zur Erstellung einer geografischen Karte in der Satellitenprojektion verbunden. Die Karteneinrichtung 107 oder die Vergleichseinrichtung ist mit einer zweiten Schnittstelle 108 zur Ausgabe von Daten verbunden.

Die Darstellung von Fig. 10 kann auch als Flussdiagramm aufgefasst werden, das den Verfahrensablauf bei der Georeferenzierung darstellt. Einzelne oder mehrere der zuvor beschriebenen Einrichtungen (z. B. sämtliche Einrichtungen mit den Bezugszeichen 103 bis 106) können in Form von Hardware oder Software realisiert sein. Insbesondere müssen die Zuordnungseinrichtungen 103, 104 nicht als separate Einrichtungen realisiert sein, sondern können z. B. Softwaremodule sein, die sich insbesondere lediglich dadurch unterscheiden, dass sie verschiedene geografische Informationen als Eingangsdaten verarbeiten.

Die Anordnung zur automatischen Georeferenzierung kann entsprechend dem oben beschriebenen Beispiel modular aufgebaut sein, wobei jeweils eines der Module einer der Einrichtungen entspricht. Den Kern der Anordnung bilden die Einrichtungen 103 bis 105. An der Schnittstelle 101 können Informationen über eine Relativbewegung des Satelliten und des beobachteten Raumkörpers, weitere Informationen und/oder daraus bereits abgeleitete geografische Daten zur Verfügung stehen. Die geografischen Daten, die auch erst später aus den an der Schnittstelle 101 zur Verfügung gestellten Informationen abgeleitet werden können, definieren ein von der Bildmatrix abgedecktes Beobachtungsgebiet in üblichen geografischen Koordinaten. Z. B. weisen die an der Schnittstelle 101 zur Verfügung stehenden geografischen Daten Eckkoordinaten und/oder Zentrums- bzw. Schwerpunktskoordinaten des Beobachtungsgebiets auf. Dabei können die geografischen Daten aus einer oder mehreren Quellen stammen, z. B. aus Metadaten und aus nachträglich korrigierten Bewegungsdaten des Satelliten. Damit können verschiedene Sätze von geografischen Daten vorliegen, die sich unterscheiden.

In der Speichereinrichtung 102 sind einerseits die Fernerkundungsdaten in der Satellitenprojektion und die geografischen Informationen abgelegt und andererseits Zusatzinformationen, die a priori feststehen und für die Georeferenzierung verwendet werden können. Insbesondere können diese Zusatzinformationen erforderlich sein, um ausgehend von den an der Schnittstelle 101 zur Verfügung stehenden Eckkoordinaten die Transformation von geografischen Informationen in die Satellitenprojektion vornehmen zu können. Beispielsweise enthalten die Zusatzinformationen Angaben zur Größe des von der Bildmatrix erfassten Beobachtungsbereichs (z. B. die Schwadbreite), zur örtlichen Auflösung der Bildelemente im Nadir und zur Position und/oder Ausrichtung des Satelliten oder des Sensors relativ zum beobachteten Raumkörper. Alternativ zu der Speichereinrichtung 102 können jedoch auch mehrere Speichereinrichtungen vorgesehen sein, sodass die verschiedenartigen Daten voneinander getrennt abgespeichert sein können.

In der Zuordnungseinrichtung 103 wird eine Transformation der geografischen Daten (z. B. Kartendaten) in die Satellitenprojektion durchgeführt, wobei die oben genannten geografischen Daten aus einer ersten Quelle (z. B. Eckkoordinaten aus Metadaten) verwendet werden. Wie bereits erwähnt wurde, kann die erwartete Relativbewegung jedoch von der tatsächlichen Relativbewegung abweichen. In der Zuordnungseinrichtung 104 wird daher (eine z. B. in gleicher Weise durchgeführte) Transformation vorgenommenen, wobei jedoch geografische Daten aus einer zweiten Quelle (z. B. Eckkoordinaten aus einer tatsächlichen Bahnbewegung des Satelliten) verwendet werden. Ein Grund für die Verwendung einer zweiten Quelle von Informationen besteht darin, dass in einem ungünstigen Fall die aus den Metadaten ermittelten Koordinaten fehlerhaft sein können, z. B. sogar völlig außerhalb des tatsächlichen Beobachtungsgebiets liegen können. Andererseits möchte man in vielen Fällen nicht generell auf die geografischen Daten aus der zweiten Quelle warten, sondern eine so genannte "Near Real-Time"-Verarbeitung der Daten durchführen.

In den Zuordnungseinrichtungen 103, 104 sind Algorithmen zur Bestimmung des Beobachtungsgebiets und zur richtigen Zuordnung von geografischen Informationen einer Vielzahl von Bildelementen der Bildmatrix implementiert. Es werden z. B. allen Bildelementen ihre geografische Länge, ihre geografische Breite und weitere Karteninformationen (z. B. topografische Informationen) zugeordnet.

In der Vergleichseinrichtung 105 findet ein Vergleich von Ergebnissen der von den Zuordnungseinrichtungen 103, 104 durchgeführten Georeferenzierungen statt. Alternativ kann auch nur eine Zuordnungseinrichtung vorgesehen sein und in der Vergleichseinrichtung ein Vergleich eines Ergebnisses der durchgeführten Georeferenzierung mit einem Referenzbild durchgeführt werden. Dabei kann eine Strukturanalyse stattfinden, auf die noch näher eingegangen wird. Der Vergleich mit dem Referenzbild kann jedoch auch von der Vergleichseinrichtung 105 durchgeführt werden, wobei die Ergebnisse einer oder beider Zuordnungseinrichtungen 103, 104 anhand des Referenzbildes überprüft werden.

Ein Vergleich mit einem Referenzbild hat den Vorteil, dass unmittelbar anhand der in der Bildmatrix vorhandenen Informationen überprüft werden kann, ob die Zuordnung der geografischen Informationen fehlerhaft ist. Ein etwaiger Positionsfehler kann in der optional vorgesehenen Korrektureinrichtung 106 korrigiert werden. Am Ausgang der Vergleichseinrichtung 105 steht somit die Bildmatrix mit richtig zugeordneten geografischen Informationen zur Verfügung.

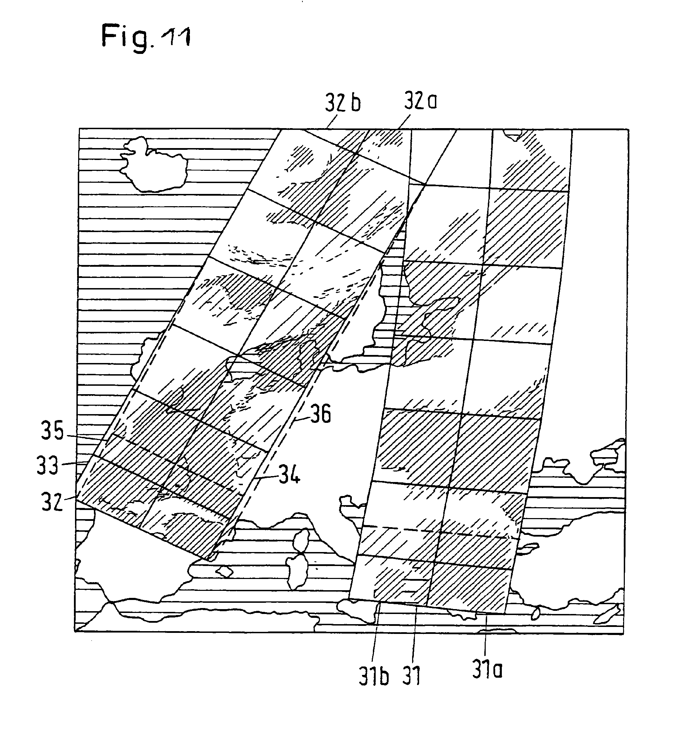

In Fig. 11 sind die optischen Daten aus zwei verschiedenen Überflügen eines Satelliten über dem europäischen Kontinent dargestellt. Dabei wurden nachträglich ermittelte hochgenaue Koordinaten für die Zuordnung der geografischen Informationen verwendet. Die Landfläche ist weiß mit schwarzer Umrandung dargestellt. Überlagert sind Beobachtungsstreifen 31, 32 mit je zwei Teilstreifen 31 a, 31 b und 32a, 32b, die wiederum in Einzelszenen (annähernd rechteckig umrahmte Gebiete) unterteilt sind. Entsprechend dieser Unterteilung erfolgt die weitere Verarbeitung der Satellitendaten. Die Unterteilung wird/wurde (z. B. durch vorher ausgeführte Rechnungen) vorgenommen, während die Satellitendaten mit Hilfe der hochgenauen Koordinaten in die Karte eingetragen wurden. Im günstigsten Fall deckt diese Unterteilung die Beobachtungsstreifen (wie beispielsweise den Beobachtungsstreifen 31 in Fig. 11) vollständig ab. Damit wäre sichergestellt, dass die einzelnen Bildmatrizen mit den richtigen geografischen Informationen verknüpft wurden bzw. werden. Bei dem linken Beobachtungsstreifen 32 ist jedoch erkennbar, dass die aus Vorberechnungen ermittelten Grenzlinien 33, 34 in südlicher Richtung zunehmend gegenüber der tatsächlichen Lage (mehrfach unterbrochene Linien 35, 36) in westlicher Richtung verschoben sind. Dadurch wird eine fehlerhafte Zuordnung von geografischen Informationen zu den aufgenommenen Bildinformationen in Satellitenprojektion bewirkt. Die fehlerhafte Zuordnung basiert auf Koordinaten, die aus den Metadaten gewonnen wurden.

In der Karteneinrichtung 107 können anschließend die für die Ausgabe einer geografischen Karte in der Satellitenprojektion erforderlichen Daten generiert werden, z. B. die Bildmatrix mit zusätzlich eingezeichneten geografischen Strukturen wie Küstenlinien und/oder Höhenlinien.

Die unterschiedlichen Ergebnisse der Zuordnungseinrichtungen 103, 104, weitere Zwischenergebnisse und/oder Endergebnisse der Zuordnung können in der Speichereinrichtung 102 und/oder in einer anderen Speichereinrichtung abgespeichert werden und bei Bedarf wieder ausgelesen werden.

Als Ergebnis liefert das Verfahren Daten in der Satellitenprojektion.

Die Qualitätskontrolle bei der Zuordnung der geografischen Informationen zu den Bildelementen kann beispielsweise in der folgenden Weise durchgeführt werden:

Es wird (z. B. unter Verwendung eines an sich bekannten Klassifizierungsalgorithmus) identifiziert, welche Bereiche des von der Bildmatrix erfassten Beobachtungsgebietes von Wolken abgedeckt sind und/oder welche (über die Fläche der Bereiche) homogenen Bereiche ein jahreszeitlich nahezu unveränderliches Strahlenspektrum emittieren (z.B. Wasserbereiche und Bereiche mit Nadelwald).

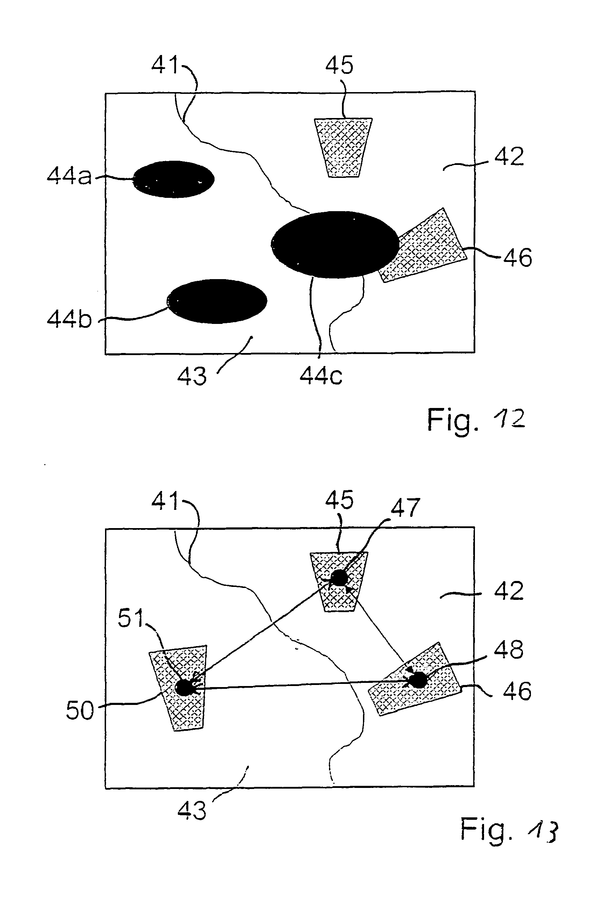

Fig. 12 zeigt schematisch eine Szene (z. B. aus einer einzelnen Bildmatrix in Satellitenprojektion) mit einer Küstenlinie 41. Rechts (östlich) der Küstenlinie 41 befindet sich eine Landfläche 42. Links (westlich) der Küstenlinie 41 befindet sich eine Wasserfläche 43. Ein Teil der Szene ist während der Beobachtung durch den Satelliten von Wolken 44a, 44b, 44c verdeckt, die als schwarze Flächen dargestellt sind. Zwei definierte Teil-Bereiche der Szene sind mit den Bezugszeichen 45, 46 bezeichnet. Die Wolke 44c verdeckt den Bereich 46 teilweise.

Wenn Wolkenbereiche (z. B. die Wolken 44) identifiziert werden, werden (z. B. nach Erstellung einer Wolkenmaske) diese Bereiche für eine weitere Bearbeitung bei der Qualitätskontrolle (z. B. Strukturanalyse) ausgeschlossen und/oder gesondert verarbeitet. Alternativ und zusätzlich zu den homogenen Bereichen können auch andere Strukturen (z. B. linienartige Strukturen, die etwa durch Bergrücken erzeugt werden, und/oder die Küstenlinie 41) verwendet werden.

Bei einer speziellen Ausgestaltung der Strukturanalyse werden für die homogenen Bereiche (zum Beispiel die Bereiche 45, 46) mit konstantem Strahlenspektrum Ränder der Bereiche ermittelt. Grenzen diese Gebiete an eine Wolke, dann werden sie bei einer bevorzugten Ausgestaltung gesondert gekennzeichnet (im Beispiel der Bereich 46). Anhand der Ränder werden die homogenen Bereiche einer Strukturanalyse unterzogen. Als Ergebnis wird ein geeignetes Strukturmaß ermittelt, das die Struktur des Gebietes anhand der Ränder charakterisiert. Insbesondere können die Ränder mit den an sich bekannten Methoden einer Vektorgrafik-Darstellung (z. B. beschrieben in Haberäcker, Peter (1995): Praxis der digitalen Bildverarbeitung und Mustererkennung .- München; Wien: Hanser, 1995 (ISBN 3-446-15517-1), auf die hiermit vollinhaltlich Bezug genommen wird) dargestellt werden, wobei z. B. für jedes der Bildelemente auf dem Rand als Vektorelement fest gehalten wird, in welche Richtung sich das nächstfolgende Bildelement auf dem Rand befindet. Nun können für die Vektoren der Ränder bzw. Strukturen aus dem Referenzbild einerseits und aus der Bildmatrix andererseits Übereinstimmungen bzw. Unterschiede festgestellt werden. Für jeweils zwei miteinander verglichene Vektoren erhält man als Ergebnis einer Aussage, ob die Ränder bzw. Strukturen gleich sind oder nicht. Insgesamt können so eine Vielzahl von unterschiedlichen Vektorpaaren aus dem Referenzbild und aus der Bildmatrix miteinander verglichen werden. Außerdem stehen Informationen über die geografischen Positionen der Ränder bzw. Strukturen zur Verfügung, sodass für zwei als gleich erkannte Ränder bzw. Strukturen Unterschiede in der Position festgestellt werden können. Aus der Auswertung einer Vielzahl von Rändern bzw. Strukturen in beiden Bildern kann eine statistische zuverlässige Aussage darüber getroffen werden, ob die geografischen Lagen und/oder Orientierungen der Bilder unterschiedlich sind. Gegebenenfalls ist eine Korrektur bei der Zuordnung der geografischen Informationen zu den Bildelementen der Bildmatrix möglich.

Eine entsprechende Strukturanalyse kann z. B. unter Verwendung eines (vorzugsweise wolkenfreien) Referenzbildes durchgeführt werden. Alternativ ist die Strukturanalyse für das Referenzbild bereits durchgeführt und liegen für die darin vorhandenen homogenen Bereiche numerische Werte der Strukturmaße vor.

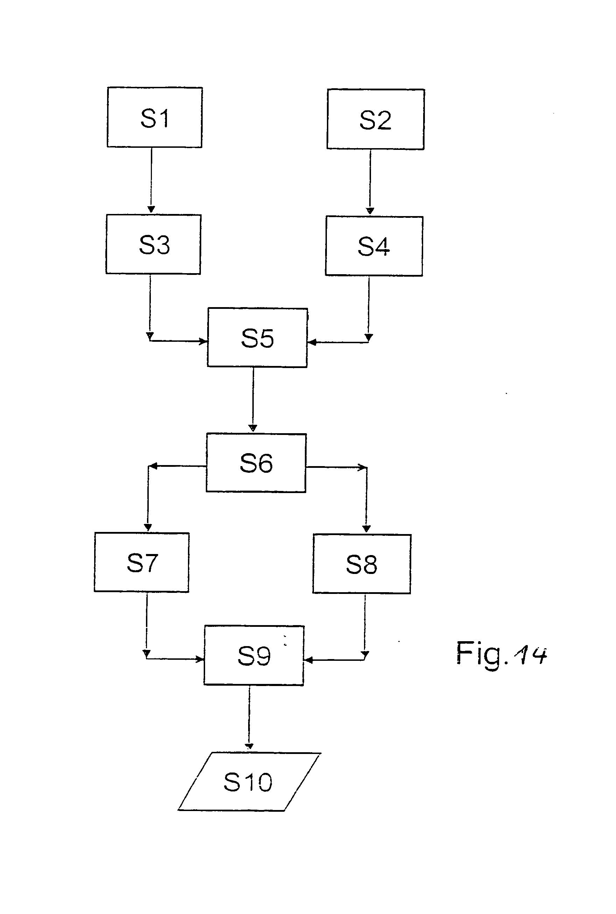

Bei einer alternativen Ausgestaltung der Strukturanalyse werden für eine Auswertung geeignete (z. B. wiederum homogene) Bereiche in dem Referenzbild und in der Bildmatrix identifiziert (z. B. die karierten Bereiche 45, 46, 50 in Fig. 13, wobei die Figur das Referenzbild ohne Wolkenbedeckung darstellt). Zur Erläuterung der Vorgehensweise wird auch auf das Flussdiagramm gemäß Fig. 14 Bezug genommen. Die Identifizierung der Bereiche in dem Referenzbild wird in Schritt S1 vorgenommen, die Identifizierung der Bereiche in der Bildmatrix in Schritt S2.

Insgesamt soll dabei jeweils eine Vielzahl von Bereichen identifiziert werden. Außerdem kann eine Zuordnung von möglicherweise einander entsprechenden Bereichen in dem Referenzbild einerseits und in der Bildmatrix andererseits durchgeführt werden, z. B. nach einer vorhergehenden Klassifizierung der Bereiche (z. B. Nadelwald, Ackerland, urbaner Bereich, Wasserfläche usw.) in Schritt S3 bzw. Schritt S4. Ein entsprechendes Klassifizierungsverfahren ist in der deutschen Patentanmeldung DE 199 39 732 A1 beschrieben, auf die hiermit vollinhaltlich Bezug genommen wird.

Wird bei einer Korrelationsanalyse (Schritt S5) für einen Bereich in dem Referenzbild kein entsprechender Bereich der Bildmatrix gefunden, kann bei einer bevorzugten Ausgestaltung an Hand der Wolkenmaske überprüft werden, ob dieser Bereich vollständig von Wolken bedeckt ist. Wenn ja, dann entfällt dieser Referenzbereich aus der weiteren Bearbeitung. Im anderen Falle wird geprüft, ob die Zuordnung zu einem wolkenbedeckten Teilgebiet hergestellt werden kann. Dazu wird eine Korrelationsanalyse des wolkenfreien Randteils des Bereichs (z. B. des Bereichs mit entsprechenden Randteilen des in Frage kommenden gesamten Referenzbereichs vorgenommen.

Wenn die einander entsprechenden Bereiche in dem Referenzbild und in der Bildmatrix einander zugeordnet sind (Schritt S6), kann beispielsweise durch folgende Vorgehensweise ermittelt werden, ob eine Fehlpositionierung oder Fehlorientierung der Bildmatrix vorliegt:

Es werden jeweils für die Bilder die geografischen Positionen der Bereiche ermittelt (in Schritt S7 für das Referenzbild und in Schritt S8 für die Bildmatrix), insbesondere die geografischen Positionen der Bereichmittelpunkte, die geografischen Positionen von eindeutig identifizierbaren Punkten z. B. auf dem Rand des Bereichs und/oder die geografischen Positionen der Bereich-Schwerpunkte (z. B. der Schwerpunkte 47, 48, 51 in Fig. 13) berechnet. Unter Schwerpunkten sind die Punkte zu verstehen, deren Integral der mit sich selbst multiplizierten Abstände zu den Rändern des Bereichs minimal ist.

Die relativen Positionen sind in der Fig. 13 durch Verbindungslinien der Schwerpunkte 47, 48, 51 dargestellt. Aus der Vielzahl von relativen Positionen und aus einem Vergleich der Situation (Schritt S9) in den beiden Bildern lassen sich insgesamt wieder der Positionsfehler und der Orientierungsfehler ermitteln (Schritt S10). Dabei kann wiederum ein Mittelwert über die Positionsunterschiede und/oder Orientierungsunterschiede von verschiedenen Gruppen mit z. B. jeweils mindestens drei Bereichen gebildet werden.

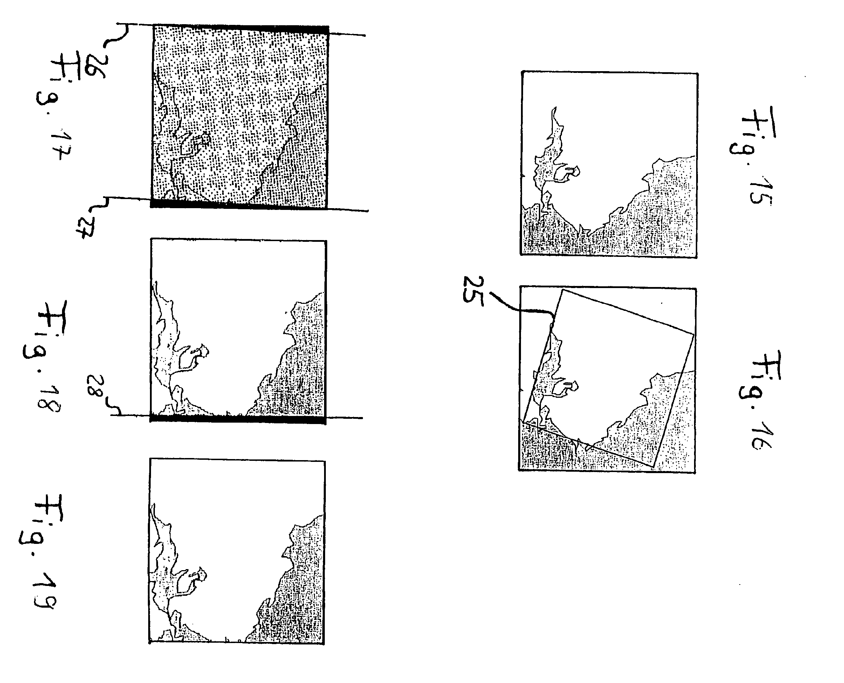

Anhand der Fig. 15 bis 19 wird nun ein Ausführungsbeispiel zur Darstellung der Transformation von geografischen Informationen in eine Satellitenprojektion beschrieben. Fig. 15 zeigt kartografische Ausgangsdaten, die beispielsweise durch eine Projektion senkrecht zur Oberfläche eines Planeten erhalten wurden. Dunkel dargestellt sind Landflächen. Hell dargestellt sind Wasserflächen.

Fig. 16 zeigt denselben Kartenausschnitt wie Fig. 15, wobei jedoch außerdem ein Teilgebiet 25 eingezeichnet ist, das dem von einem Satelliten beobachteten Bereich (d. h. einer Bildmatrix) entspricht. Mit anderen Worten: Nur für das Teilgebiet 25 liegen in der Bildmatrix Informationen vor.

In der Regel sieht ein Satellit die Planetenoberfläche nicht aus einer Richtung, die der Projektion der kartografischen Daten entspricht. Aus diesem Grund wird eine Transformation der kartografischen Daten vorgenommen. Würde umgekehrt das von dem Satelliten aufgenommene (in der Satellitenprojektion vorliegende) Bild in die Koordinatendarstellung der kartografischen Ausgangsdaten transformiert, wären damit die bereits beschriebenen Nachteile verbunden. Insbesondere würde sich die Größe der zu bearbeitenden Matrix vergrößern.

Bei der Transformation werden zunächst die Eckkoordinaten des beobachteten Teilgebietes 25 ermittelt (z. B. aus den Metadaten). Anschließend wird dieses Teilgebiet 25 gedreht, so dass es einer Orientierung des aufgenommenen Bildes entspricht und somit die kartografische Information nur noch parallel (z. B. quer zur Zeilenrichtung der Bildmatrix) zu den Bilddaten verschoben ist. Die Ergebnissituation ist in Fig. 17 dargestellt, wobei sich das von der Bildmatrix erfasste Teilgebiet zwischen den Linien 26 und 27 befindet. Wie die Darstellung gemäß Fig. 17 zeigt, ist das beobachtete Teilgebiet in der Kartenprojektion nicht ganz rechteckig, sondern parallelogrammartig verzerrt. Für die außerhalb der Linien 26, 27 liegenden Teilgebiete liegen keine Beobachtungsdaten vor. Die außerhalb der Linien 26, 27 liegenden Teilgebiete sind keilförmig und entsprechen in dem Ausführungsbeispiel der Drehung des Planeten, während der Satellit den Planeten überfliegt.

Im nächsten Schritt wird die Drehung des Planeten eliminiert. Das Ergebnis ist in Fig. 18 dargestellt. Drei der Ränder des Kartenausschnitts stimmen nun mit dem beobachteten Gebiet überein. In der Figur ist eine Linie 28 eingezeichnet, die das mit dem beobachteten Gebiet übereinstimmende Teilgebiet des Kartenausschnitts von einem anderen Teilgebiet trennt, für das keine Beobachtungsdaten vorliegen. In dem folgenden, letzten Schritt wird das Teilgebiet abgeschnitten, für das keine Beobachtungsdaten vorliegen. Anschließend können z.B. die aus dem Kartenausschnitt erkennbaren Land-/Wassergrenzen in die Bildmatrix oder in eine entsprechende Matrix zur Auswertung von Abständen in der Bildmatrix übernommen werden, bzw. geografische Informationen über den Land-/Wassergrenzverlauf den Bildelementen der Bildmatrix zugeordnet werden.

## Patentansprüche

1. Verfahren zur Auswahl von Fernerkundungsdaten, wobei
• Aufgabenprofildaten verwendet werden, die Aufgaben und/oder Ziele einer Nutzung von Fernerkundungsdaten definieren,
• automatisch zumindest eine physikalische Dateneigenschaft, insbesondere eine Auflösung, von Fernerkundungsdaten den Aufgabenprofildaten zugeordnet wird, sodass zumindest eine Anforderung an die Nutzung von Fernerkundungsdaten definiert ist,
• Dateneigenschaften von verfügbaren Fernerkundungsdaten unter Verwendung der zumindest einen Anforderung geprüft werden und festgestellt wird, ob und/oder bis zu welchem Grad mit den verfügbaren Fernerkundungsdaten die zumindest eine Anforderung erfüllt werden kann,und
• ein Ergebnis der Feststellung automatisch ausgegeben wird
**dadurch gekennzeichnet, dass**
• bei der Prüfung, ob die zumindest eine Anforderung erfüllt werden kann, ein Anforderungsprofil und ein Leistungsprofil der Fernerkundungsdaten miteinander verglichen werden, wobei das Leistungsprofil und das Anforderungsprofil gleiche Arten und/oder eine gleiche Anzahl von Kategorien von Eigenschaften der Fernerkundungsdaten aufweisen,
• in den einander entsprechenden Kategorien abgelegte Eigenschaften paarweise miteinander verglichen werden, und
• Unterschiede und Übereinstimmungen in den einzelnen Kategorien in unterschiedlichem Maße gewichtet werden, wobei abhängig von Vorgaben eines Nutzers gewichtet wird.

2. Verfahren nach Anspruch 1, wobei außer den Aufgabenprofildaten auch Nutzerprofildaten verwendet werden, die Eigenschaften eines Nutzers beschreiben, und wobei die zumindest eine physikalische Dateneigenschaft den Aufgabenprofildaten und den Nutzerprofildaten zugeordnet wird, sodass die zumindest eine Anforderung an die Nutzung von Fernerkundungsdaten definiert ist.

3. Verfahren nach Anspruch 1 oder 2, wobei außer den Dateneigenschaften von verfügbaren Fernerkundungsdaten auch verfügbare Verarbeitungsroutinen zur Weiterverarbeitung der Fernerkundungsdaten unter Verwendung der zumindest einen Anforderung geprüft werden und festgestellt wird, ob und/oder bis zu welchem Grad mit den verfügbaren Fernerkundungsdaten und den verfügbaren Verarbeitungsroutinen die zumindest eine Anforderung erfüllt werden kann, und wobei ein Ergebnis der Feststellung automatisch ausgegeben wird.

4. Verfahren nach einem der Ansprüche 1 bis 3, wobei ein physikalisches Modell die Bewegung von Satelliten relativ zur Oberfläche eines bei der Fernerkundung beobachteten Objekts beschreibt, wobei das physikalische Modell bei der Definition der Anforderungen verwendet wird und wobei die Fernerkundungsdaten von zumindest einem der Satelliten aufgezeichnet werden oder wurden.

5. Verfahren nach einem der Ansprüche 1 bis 4, wobei die aus den Aufgabenprofildaten erzeugten Anforderungen an die Nutzung von Fernerkundungsdaten zur Steuerung einer Datenverarbeitung der Fernerkundungsdaten verwendet werden.

6. Verfahren nach dem vorhergehenden Anspruch, wobei den Anforderungen entsprechende Fernerkundungsdaten angefordert und geladen werden und wobei die Datenverarbeitung der geladenen Daten entsprechend den Anforderungen gesteuert wird.

7. Verfahren nach einem der vorhergehenden Ansprüche, wobei möglichen Anforderungen in zumindest einer der Kategorien mathematische Funktionen zugeordnet werden, wobei durch jede der Funktionen möglichen Eigenschaften in dem Leistungsprofil jeweils eine Bewertungszahl zugeordnet ist und wobei ein Grad einer Übereinstimmung einer der Anforderungen mit einer der Eigenschaften **dadurch** ermittelt wird, dass aus der zugeordneten Funktion die Bewertungszahl ermittelt wird und als Grad der Übereinstimmung verwendet wird.

8. Verfahren nach einem der Ansprüche 1 bis 7, zur Verarbeitung von Fernerkundungsdaten, insbesondere von Fernerkundungsdaten, die von einem Erdsatelliten aufgenommen wurden, wobei
• Verarbeitungsroutinen (A - F) zur Verarbeitung der Fernerkundungsdaten zur Verfügung stehen und/oder erstellt werden, wobei die Verarbeitungsroutinen (A - F) für eine Verarbeitung einer Vielzahl von unterschiedlichen Fernerkundungsdaten einsetzbar sind,
• unter Verwendung zumindest einer definierten Anforderung an eine Nutzung von Fernerkundungsdaten automatisch eine Mehrzahl der Verarbeitungsroutinen (A - F) ausgewählt wird und die ausgewählten Verarbeitungsroutinen (A - F) automatisch miteinander verknüpft werden, sodass die ausgewählten Verarbeitungsroutinen (A - F) durch Verarbeitung von Fernerkundungsdaten die zumindest eine definierte Anforderung erfüllen.

9. Verfahren nach Anspruch 8, wobei durch die Verknüpfung der ausgewählten Verarbeitungsroutinen (A - F) eine Prozesskette (5) zur Verarbeitung der ausgewählten Fernerkundungsdaten gebildet wird und wobei die Fernerkundungsdaten in der Prozesskette (5) nacheinander jeweils durch eine der ausgewählten Verarbeitungsroutinen (A - F) verarbeitet werden.

10. Verfahren nach einem der Ansprüche 8 und 9, wobei zumindest eine der Verarbeitungsroutinen (A - F) die Verarbeitung der Fernerkundungsdaten automatisch an eine Art und/oder an Eigenschaften der Fernerkundungsdaten anpasst.

11. Verfahren nach einem der Ansprüche 8 bis 10, wobei die Verarbeitungsroutinen (A - F) themabezogene Verarbeitungsroutinen aufweisen, wobei die themabezogenen Verarbeitungsroutinen bei der Verarbeitung der Fernerkundungsdaten Zusatzinformationen verwenden, die zur Erfüllung von Anforderungen erforderlich sind, die ein bestimmtes Thema der Nutzung von Fernerkundungsdaten betreffen.

12. Verfahren nach einem der Ansprüche 8 bis 11, wobei die Verarbeitungsroutinen Standardverarbeitungsroutinen aufweisen und wobei die Standardverarbeitungsroutinen bei einer Vielzahl von Anforderungen ausgeführt werden.

13. Verfahren nach einem der Ansprüche 1 bis 12, zur automatischen Georeferenzierung von Fernerkundungsdaten, wobei
• die Fernerkundungsdaten als Bildmatrix in einer Satellitenprojektion vorliegen,
• geografische Informationen, die in einer von der Satellitenprojektion abweichenden Projektion oder geografischen Darstellung vorliegen und die insbesondere geografischen Erdkoordinaten zugeordnet sind, Bildelementen der Bildmatrix zugeordnet werden.

14. Verfahren nach Anspruch 13, wobei die geografischen Informationen derart den Bildelementen der Bildmatrix zugeordnet werden, dass sie unter Verwendung von Bildkoordinaten der Bildmatrix abrufbar sind.

15. Verfahren nach Anspruch 13 oder 14, wobei für eine Mehrzahl von Bildelementen der Bildmatrix entsprechende geografische Koordinaten aus den geografischen Informationen ermittelt werden, so dass ein von der Bildmatrix abgedecktes Beobachtungsgebiet (42, 43) definiert ist, wobei dem definierten Beobachtungsgebiet (42, 43) entsprechende geografische Daten transformiert werden, sodass geografische Daten und zugehörige Bildelemente der Bildmatrix in dem definierten Beobachtungsgebiet (42, 43) einander zugeordnet werden.

16. Verfahren nach dem vorhergehenden Anspruch, wobei bei der Transformation der geografischen Daten eine Relativbewegung des Satelliten und eines beobachteten Raumkörpers berücksichtigt werden.

17. Verfahren nach einem der Ansprüche 13 bis 16, wobei aus einer Messung der tatsächlichen Relativposition des Satelliten und eines beobachteten Raumkörpers ermittelte, korrigierte Informationen über die Relativbewegung des Satelliten und des beobachteten Raumkörpers verwendet werden und wobei das Ergebnis der Transformation der geografischen Daten und/oder diejenigen geografischen Informationen überprüft werden, die das Beobachtungsgebiet (42, 43) definieren.

18. Verfahren nach einem der Ansprüche 13 bis 17, wobei ein Referenzbild verwendet wird, wobei durch Zuordnung von gleichen Strukturen in dem Referenzbild und in der Bildmatrix und durch anschließende Bestimmung von geografischen Positionen der Strukturen auf Basis der jeweils zugeordneten geografischen Informationen in dem Referenzbild und in der Bildmatrix ermittelt wird, ob ein Fehler bei der Zuordnung der geografischen Informationen zu den Bildelementen der Bildmatrix vorliegt und/oder wie groß der Fehler ist.

19. Anordnung zur Auswahl von Fernerkundungsdaten, wobei die Anordnung Folgendes aufweist:
- eine Schnittstelle (IN) zur Eingabe von Aufgabenprofildaten, die Aufgaben und/oder Ziele einer Nutzung von Fernerkundungsdaten definieren,
- eine Zuordnungseinrichtung (MA), die mit der Schnittstelle (IN) verbunden ist und die ausgestaltet ist, automatisch zumindest eine physikalische Dateneigenschaft, insbesondere eine Auflösung, von Fernerkundungsdaten den Aufgabenprofildaten zuzuordnen, sodass zumindest eine Anforderung an die Nutzung von Fernerkundungsdaten definiert ist,
- eine Prüfeinrichtung (MD), die ausgestaltet ist, Dateneigenschaften von verfügbaren Fernerkundungsdaten unter Verwendung der zumindest einen Anforderung zu prüfen,
- eine Feststellungseinrichtung (MG, MB), die ausgestaltet ist festzustellen, ob und/oder bis zu welchem Grad mit den verfügbaren Fernerkundungsdaten die zumindest eine Anforderung erfüllt werden kann,und
- eine Ausgabeeinrichtung (IN), die ausgestaltet ist, ein Ergebnis der Feststellung automatisch auszugeben.
**dadurch gekennzeichnet, dass** die Anordnung ausgestaltet ist, bei der Prüfung, ob die zumindest eine Anforderung erfüllt werden kann,
- ein Anforderungsprofil und ein Leistungsprofil der Fernerkundungsdaten miteinander zu vergleichen, wobei das Leistungsprofil und das Anforderungsprofil gleiche Arten und/oder eine gleiche Anzahl von Kategorien von Eigenschaften der Fernerkundungsdaten aufweisen,
- in den einander entsprechenden Kategorien abgelegte Eigenschaften paarweise miteinander zu verglichen, und
- Unterschiede und Übereinstimmungen in den einzelnen Kategorien in unterschiedlichem Maße zu gewichten, wobei abhängig von Vorgaben eines Nutzers gewichtet wird.

20. Anordnung nach Anspruch 19, zur Verarbeitung von Fernerkundungsdaten, insbesondere von Fernerkundungsdaten, die von einem Erdsatelliten aufgenommen wurden, wobei die Anordnung Folgendes aufweist:
- eine Mehrzahl von Verarbeitungsroutinen (A - F) zur Verarbeitung der Fernerkundungsdaten,
- eine Schnittstelle (2a) zur Eingabe zumindest einer definierten Anforderung an eine Nutzung von Fernerkundungsdaten,
- eine Verknüpfungseinrichtung (3), die ausgestaltet ist, unter Verwendung der zumindest einen definierten Anforderung zumindest eine Teilanzahl (A - F) der Verarbeitungsroutinen (A - F) auszuwählen und zu verknüpfen, sodass die ausgewählten Verarbeitungsroutinen (A - F) durch Verarbeitung von Fernerkundungsdaten die zumindest eine definierte Anforderung erfüllen können.

21. Anordnung nach dem vorhergehenden Anspruch, wobei die ausgewählten Verarbeitungsroutinen (A - F) zu einer Prozesskette (5) verknüpft sind, wobei die Fernerkundungsdaten in der Prozesskette (5) nacheinander jeweils durch eine der ausgewählten Verarbeitungsroutinen (A - F) verarbeitet werden können.

22. Anordnung nach einem der Ansprüche 19 bis 21, zur automatischen Georeferenzierung von Fernerkundungsdaten, die von einem Erdsatelliten aufgenommen wurden, wobei die Anordnung Folgendes aufweist:
• eine Speichereinrichtung (102) zur Speicherung von Fernerkundungsdaten, die als Bildmatrix in einer Satellitenprojektion vorliegen,
• eine Zuordnungseinrichtung (103, 104), die mit der Speichereinrichtung (102) verbunden ist und die ausgestaltet ist, geografische Informationen, die in einer von der Satellitenprojektion abweichenden Projektion oder geografischen Darstellung vorliegen, Bildelementen der Bildmatrix zuzuordnen.

23. Anordnung nach dem vorhergehenden Anspruch, wobei die Zuordnungseinrichtung (103, 104) ausgestaltet ist, für eine Mehrzahl von Bildelementen der Bildmatrix entsprechende geografische Koordinaten aus den geografischen Informationen zu ermitteln, so dass ein von der Bildmatrix abgedecktes Beobachtungsgebiet (42, 43) definiert ist, und wobei die Zuordnungseinrichtung (103, 104) ausgestaltet ist, in dem Beobachtungsgebiet (42, 43) liegenden Bildelementen jeweils geografische Daten zuzuordnen.

24. Anordnung nach 22 oder 23, wobei die Zuordnungseinrichtung (103, 104) eine Transformationseinrichtung aufweist, die ausgestaltet ist, einem definierten Beobachtungsgebiet (42, 43) entsprechende geografische Daten unter Berücksichtigung von Bewegungsinformationen über eine Relativbewegung des Satelliten und eines Raumkörpers zu transformieren, sodass geografische Daten und zugehörige Bildelemente der Bildmatrix in dem definierten Beobachtungsgebiet (42, 43) einander zugeordnet werden.

## Claims

1. Method for selecting remote sensing data, wherein
• task profile data is used defining tasks and/or goals for which the remote sensing data is used,
• at least one physical data property, in particular a resolution, of remote sensing data is automatically assigned to the task profile data so that at least one requirement for the use of the remote sensing data is defined,
• data properties of available remote sensing data are checked against the at least one requirement and it is ascertained whether and/or to what level the at least one requirement can be met with the available remote sensing data, and
• a result of the ascertainment is automatically output, **characterized in that**
• when checking whether the at least one requirement can be met, a requirement profile and a performance profile of the remote sensing data are compared with one another, wherein the performance profile and the requirement profile have identical types and/or an identical number of categories of properties of the remote sensing data,
• properties put in the categories that correspond with one another are compared with one another in pairs, and
• differences and agreements in the individual categories are weighted in varying degrees, wherein weighting is dependent on the preferences of a user.

2. Method according to Claim 1, wherein user profile data is also used in addition to the task profile data, said user profile data describing the properties of a user, and wherein the at least one physical data property is assigned to the task profile data and the user profile data so that the at least one requirement for use of the remote sensing data is defined.

3. Method according to Claim 1 or 2, wherein in addition to the data properties of available remote sensing data, available processing routines for further processing the remote sensing data are checked against the at least one requirement and it is ascertained whether and/or to what level the at least one requirement can be met with the available remote sensing data and the available processing routines, and wherein a result of the ascertainment is automatically output.

4. Method according to one of Claims 1 to 3, wherein a physical model describes the movement of satellites relative to the surface of an object observed during the remote sensing, wherein the physical model is used when defining the requirements and wherein the remote sensing data is or has been recorded by at least one of the satellites.

5. Method according to one of Claims 1 to 4, wherein the requirements for use of the remote sensing data generated from the task profile data are used for controlling data processing of the remote sensing data.

6. Method according to one of the preceding claims, wherein remote sensing data corresponding to the requirements is requested and loaded and wherein the data processing of the loaded data is controlled according to the requirements.

7. Method according to one of the preceding claims, wherein mathematical functions are assigned to possible requirements in at least one of the categories, wherein a score is assigned by each of the functions to each of the possible properties in the performance profile and wherein a degree of agreement of one of the requirements is determined with one of the properties by the score being determined from the assigned function and used as the degree of agreement.

8. Method according to one of Claims 1 to 7, for processing remote sensing data, in particular remote sensing data that has been recorded by an earth satellite, wherein
• processing routines (A - F) are available and/or are created for processing the remote sensing data, wherein the processing routines (A - F) can be used for processing a large number of different remote sensing data,
• by using at least one defined requirement for a use of the remote sensing data, a large number of processing routines (A - F) is automatically selected and the selected processing routines (A - F) are automatically linked together so that the selected processing routines (A - F) meet the at least one defined requirement by processing the remote sensing data.

9. Method according to Claim 8, wherein a process chain (5) for processing the selected remote sensing data is formed through the linking of the selected processing routines (A - F) and wherein the remote sensing data is processed in the process chain (5) one after the other by each of the selected processing routines (A - F).

10. Method according to one of Claims 8 and 9, wherein at least one of the processing routines (A - F) adapts the processing of the remote sensing data automatically to a type and/or to properties of the remote sensing data.

11. Method according to one of Claims 8 to 10, wherein the processing routines (A - F) include subject-related processing routines, wherein when processing the remote sensing data, the subject-related processing routines use additional information that is necessary for meeting the requirements that relate to a specific subject of the use of remote sensing data.

12. Method according to one of Claims 8 to 11, wherein the processing routines include standard processing routines and wherein the standard processing routines are executed with a large number of requirements.

13. Method according to one of Claims 1 to 12, for automatically georeferencing the remote sensing data, wherein
• the remote sensing data is presented in the form of an image matrix in a satellite projection,
• geographic information that is presented in a projection or a geographic representation that deviates from the satellite projection and to which, in particular, geographic earth coordinates are assigned, is assigned to the pixels of the image matrix.

14. Method according to Claim 13, wherein the geographic information is assigned to the pixels of the image matrix in such a manner that it can be called up using the image coordinates of the image matrix.

15. Method according to Claim 13 or 14, wherein for a large number of pixels of the image matrix, corresponding geographic coordinates are determined from the geographic information so that an observation area (42, 43) covered by the image matrix is defined, wherein geographic data corresponding to the defined observation area (42, 43) is transformed so that geographic data and the associated pixels of the image matrix in the defined observation area (42, 43) are assigned to one another.

16. Method according to the preceding Claim, wherein a relative movement of the satellite and of an observed space body are taken into account when transforming the geographic data.

17. Method according to one of Claims 13 to 16, wherein corrected information on the relative movement of the satellite and of an observed space body, determined from a measurement of the actual relative position of the satellite and of an observed space body, is used and wherein the result of the transformation of the geographic data and/or that geographic information defining the observation area (42, 43) is checked.

18. Method according to one of Claims 13 to 17, wherein a reference image is used, wherein by assigning identical structures in the reference image and in the image matrix and by subsequently determining geographic positions of the structures on the basis of the assigned geographic information in each case in the reference image and in the image matrix, it is determined whether an error is present in the assignment of the geographic information to the pixels of the image matrix and/or the size of the error.

19. Arrangement for selecting remote sensing data, wherein the arrangement includes the following:
- an interface (IN) for the input of task profile data that defines tasks and/or goals of a use of the remote sensing data,
- an assigning device (MA) that is connected to the interface (IN) and that is developed to assign at least one physical data property, in particular a resolution, of remote sensing data automatically to the task profile data so that at least one requirement for the use of the remote sensing data is defined,
- a checking device (MD) that is developed to check the data properties of the available remote sensing data against the at least one requirement,
- an ascertaining device (MG, MB) that is developed to ascertain whether and/or to what extent the at least one requirement can be met with the available remote sensing data, and
- an output device (IN) that is developed to output a result of the ascertainment in an automatic manner,
**characterized in that**, during the check whether the at least one requirement can be met, the arrangement is developed
- to compare a requirement profile and a performance profile of the remote sensing data with one another, wherein the performance profile and the requirement profile have identical types and/or an identical number of categories of properties of the remote sensing data,
- to compare properties, put in the categories that correspond to one another, with one another in pairs,
- to weight differences and agreements in the individual categories in varying degrees, wherein weighting is effected depending of the preferences of a user.

20. Arrangement according to Claim 19, for processing remote sensing data, in particular remote sensing data that has been recorded by an earth satellite, wherein the arrangement includes the following:
- a large number of processing routines (A - F) for processing the remote sensing data,
- an interface (2a) for input of at least one defined requirement for the use of the remote sensing data,
- a linking device (3) that is developed, using the at least one defined requirement, to select at least one part number (A - F) of the processing routines (A - F) and to link them together so that the selected processing routines (A- F) can meet the at least one defined requirement by processing the remote sensing data.

21. Arrangement according to the preceding Claim, wherein the selected processing routines (A - F) are linked to form a process chain (5), wherein the remote sensing data can be processed in the process chain (5) one after the other by each of the selected processing routines (A - F).

22. Arrangement according to one of Claims 19 to 21, for the automatic georeferencing of remote sensing data that has been recorded by an earth satellite, wherein the arrangement includes the following:
• a memory device (102) for storing remote sensing data that is present in the form of an image matrix in a satellite projection,
• an assigning device (103, 104), which is connected to the memory device (102) and is developed to assign geographic information that is present in a projection or geographic representation that deviates from the satellite projection, to pixels of the image matrix.

23. Arrangement according to the preceding Claim, wherein the assigning device (103, 104) is developed to determine corresponding geographic coordinates for a large number of pixels of the image matrix from the geographic information so that an observation area (42, 43) covered by the image matrix is defined, and wherein the assigning device (103, 104) is developed to assign geographic data to pixels situated in the observation region (42, 43).

24. Arrangement according to 22 or 23, wherein the assigning device (103, 104) includes a transforming device that is developed to transform geographic data corresponding to a defined observation area (42, 43) by taking into account movement information concerning a relative movement between the satellite and a space body, so that geographic data and associated pixels of the image matrix are assigned to one another in the defined observation area (42, 43).

## Revendications

1. Procédé pour sélectionner des données de télédétection,
- des données de profil de tâche étant utilisées, lesquelles définissent des tâches et/ ou objectifs d'une utilisation de données de télédétection,
- au moins une propriété physique des données, en particulier une décomposition des données de télédétection, étant automatiquement associée aux données de profil de tâche, de manière à définir au moins une demande pour l'utilisation de données de télédétection,
- des propriétés de données des données de télédétection disponibles étant vérifiées en utilisant cette au moins une demande, et une détermination étant établie afin de savoir si, et/ou jusqu'à quel degré, il est possible de répondre à cette au moins une demande avec les données de télédétection disponibles, et
- un résultat de détermination étant automatiquement donné, **caractérisé en ce que**
- lors de la vérification, afin de savoir s'il est possible de répondre à cette au moins une demande, on compare entre eux un profil de demande et un profil de performance des données de télédétection, le profil de performance et le profil de demande présentant des types similaires, et/ou un même nombre, de catégories de propriétés des données de télédétection,
- des propriétés déposées dans les catégories correspondant les unes aux autres étant comparées entre elles par paires, et
- des différences et concordances des catégories individuelles étant pondérées selon des proportions différentes, la pondération étant effectuée en fonction des consignes d'un utilisateur.

2. Procédé selon la revendication 1, des données de profil utilisateur étant également utilisées en plus des données de profil de tâche, lesquelles décrivent des propriétés d'un utilisateur, et la propriété physique des données au moins au nombre de une étant associée aux données de profil de tâche et aux données de profil utilisateur, de manière à définir cette au moins une demande pour l'utilisation de données de télédétection.

3. Procédé selon la revendication 1 ou 2, des routines de traitement disponibles pour le traitement ultérieur des données de télédétection en utilisant cette au moins une demande étant également vérifiées en plus des propriétés de données des données de télédétection disponibles, et une détermination étant établie pour savoir si, et/ou jusqu'à quel degré, il est possible de répondre, avec les données de télédétection disponibles et les routines de traitement disponibles, à cette au moins une demande, et un résultat de détermination étant automatiquement donné.

4. Procédé selon l'une des revendications 1 à 3, un modèle physique décrivant le mouvement de satellites par rapport à la surface d'un objet observé lors de la télédétection, le modèle physique étant utilisé lors de la définition des demandes et les données de télédétection d'au moins l'un des satellites étant enregistrées ou ayant été enregistrées.

5. Procédé selon l'une des revendications 1 à 4, les demandes pour l'utilisation de données de télédétection générées à partir des données de profil de tâche étant utilisées pour commander un traitement de données des données de télédétection.

6. Procédé selon l'une des revendications précédentes, des données de télédétection correspondant aux demandes étant demandées et chargées, et le traitement des données chargées étant commandé en fonction des demandes.

7. Procédé selon l'une des revendications précédentes, des fonctions mathématiques étant associées à des demandes potentielles dans au moins l'une des catégories, moyennant quoi l'on associe, grâce à chacune des fonctions, respectivement un chiffre d'évaluation à des propriétés potentielles dans le profil de performance, et moyennant quoi un degré de concordance d'une des demandes avec une des propriétés est calculé en calculant le chiffre d'évaluation à partir de la fonction associée et en l'utilisant en tant que degré de concordance.

8. Procédé selon l'une des revendications 1 à 7, pour le traitement de données de télédétection, en particulier de données de télédétection ayant été enregistrées par un satellite de la terre,
- des routines de traitement (A-F) pour le traitement des données de télédétection étant disponibles et/ou constituées, les routines de traitement (A-F) pouvant être utilisées pour le traitement d'une multitude de données de télédétection différentes,
- grâce à l'utilisation d'au moins une demande définie pour une utilisation de données de télédétection, une multitude des routines de traitement (A-F) étant automatiquement sélectionnée, et les routines de traitement (A-F) sélectionnées étant automatiquement enchaînées ensemble, de sorte que les routines de traitement (A-F) sélectionnées puissent répondre à cette au moins une demande définie grâce au traitement de données de télédétection.

9. Procédé selon la revendication 8, le chaînage des routines de traitement (A-F) sélectionnées permettant de former une chaîne de traitements (5) pour le traitement des données de télédétection sélectionnées, et les données de télédétection étant traitées les unes après les autres dans la chaîne de traitements (5) grâce à l'une des routines de traitement (A-F) sélectionnée.

10. Procédé selon l'une des revendications 8 et 9, au moins l'une des routines de traitement (A-F) adaptant automatiquement le traitement des données de télédétection à un type et/ ou des propriétés des données de télédétection.

11. Procédé selon l'une des revendications 8 à 10, les routines de traitement (A-F) présentant des routines de traitement par thèmes, les routines de traitement par thèmes utilisant des informations complémentaires lors du traitement des données de télédétection, lesquelles sont nécessaires pour satisfaire des demandes concernant un thème déterminé pour l'utilisation de données de télédétection.

12. Procédé selon l'une des revendications 8 à 11, les routines de traitement présentant des routines de traitement standard, et les routines de traitement standard étant exécutées en cas d'une pluralité de demandes.

13. Procédé selon l'une des revendications 1 à 12, pour le référencement géographique automatique de données de télédétection,
- les données de télédétection se présentant sous forme de matrice d'image dans une projection de satellite,
- des informations géographiques, lesquelles se présentent sous forme d'une projection différente de la projection de satellite ou d'une représentation géographique et lesquelles sont en particulier associées à des coordonnées géographiques terrestres, étant associées à des éléments d'image de la matrice d'image.

14. Procédé selon la revendication 13, les informations géographiques étant associées aux éléments d'image de la matrice d'image de manière à pouvoir être extraites en utilisant des coordonnées d'image de la matrice d'image.

15. Procédé selon la revendication 13 ou la revendication 14, avec lequel on détermine, pour une pluralité d'éléments d'image de la matrice d'image, des coordonnées géographiques correspondantes à partir des informations géographiques, de sorte qu'une zone d'observation (42, 43) couverte par la matrice d'image est définie, des données géographiques correspondantes étant transformées pour la zone d'observation définie (42, 43), de sorte que des données géographiques et des éléments d'image associés de la matrice d'image sont associés les uns aux autres dans la zone d'observation définie (42, 43).

16. Procédé selon la revendication précédente avec lequel, lors de la transformation des données géographiques, on tient compte d'un mouvement relatif du satellite et d'un corps spatial observé.

17. Procédé selon l'une des revendications 13 à 16 avec lequel, grâce à une mesure de la position relative réelle du satellite et d'un corps spatial observé, des informations détectées et corrigées concernant le mouvement relatif du satellite et du corps spatial observé sont utilisées, et le résultat de la transformation des données géographiques étant vérifié et/ou celles des informations géographiques étant vérifiées, lesquels définissent la zone d'observation (42, 43).

18. Procédé selon l'une des revendications 13 à 17, une image de référence étant utilisée, moyennant quoi l'on détermine, grâce à l'association de structures identiques dans l'image de référence et dans la matrice d'image et grâce à la détermination qui s'en suit de positions géographiques des structures sur la base des informations géographiques respectivement associées dans l'image de référence et la matrice d'image, s'il y a une erreur lors de l'association des informations géographiques aux éléments d'image de la matrice d'image et/ou quel est le degré d'erreur.

19. Dispositif pour la sélection de données de télédétection, le dispositif présentant les suivantes :
- une interface (IN) pour la saisie de données de profil de tâche, lesquelles définissent des tâches et/ ou objectifs d'une utilisation de données de télédétection,
- un dispositif d'association (MA) en liaison avec l'interface (IN) et réalisé de manière à associer automatiquement au moins une propriété physique des donnée, en particulier une décomposition, de données de télédétection, aux données de profil de tâche, de sorte à au moins définir une demande pour l'utilisation des données de télédétection,
- un dispositif de vérification (MD) réalisé de manière à vérifier des propriétés de données des données de télédétection disponibles en utilisant cette au moins une demande,
- un dispositif de détermination (MG, MB) réalisé de manière à déterminer si, et/ou dans quelle mesure, il est possible de répondre à cette au moins une demande avec les données de télédétection disponibles, et
- un dispositif de sortie (IN) lequel est réalisé de manière à délivrer automatiquement un résultat de la détermination,
**caractérisé en ce que** le dispositif est réalisé afin de, lors de la vérification pour savoir s'il est possible de répondre à cette au moins une demande,
- comparer un profil de demande et un profil de performance des données de télédétection l'un avec l'autre, le profil de performance et le profil de demande présentant des types identiques, et/ ou un même nombre, de catégories de propriétés des données de télédétection,
- comparer des propriétés déposées dans les catégories correspondant les unes aux autres, entre elles, par paires, et
- pondérer des différences et concordances des catégories individuelles selon des proportions différentes, la pondération étant effectuée en fonction des consignes d'un utilisateur.

20. Dispositif selon la revendication 19, pour le traitement de données de télédétection, en particulier de données de télédétection ayant été enregistrées par un satellite de la terre, le dispositif présentant :
- une pluralité de routines de traitement (A-F) pour le traitement des données de télédétection,
- une interface (2a) pour la saisie d'au moins une demande définie pour une utilisation des données de télédétection,
- un dispositif de chaînage (3) réalisé afin de, en utilisant cette au moins une demande définie, sélectionner au moins un nombre partiel (A-F) des routines de traitement (A-F) et en assurer le chaînage, de sorte que les routines de traitement sélectionnées (A-F), grâce au traitement de données de télédétection, puissent répondre à cette au moins une demande définie.

21. Dispositif selon la revendication précédente, les routines de traitement sélectionnées (A-F) étant soumises à un chaînage pour former une chaîne de traitements (5), les données de télédétection pouvant respectivement être traitées les unes après les autres dans la chaîne des traitements (5) respectivement grâce à l'une des routines de traitement sélectionnée (A-F).

22. Dispositif selon l'une des revendications 19 à 21, pour le référencement géographique automatique de données de télédétection, lesquelles ont été enregistrées par un satellite de la terre, le dispositif présentant :
- un dispositif de stockage (102) pour stocker des données de télédétection, lesquelles se présentent sous forme de matrice d'image d'une projection de satellite,
- un dispositif d'association (103, 104) en liaison avec le dispositif de stockage (102) et réalisé afin d'associer des informations géographiques, lesquelles se présentent sous forme d'une projection différente de la projection de satellite ou d'une représentation géographique, à des éléments d'image de la matrice d'image.

23. Dispositif selon la revendication précédente, le dispositif d'association (103, 104) étant réalisé afin de détecter, pour une pluralité d'éléments d'image de la matrice d'image, des coordonnées géographiques correspondantes à partir des informations géographiques, de sorte à définir une zone d'observation (42, 43) couverte par la matrice d'image, et le dispositif d'association (103, 104) étant réalisé afin d'associer aux éléments d'image se trouvant dans la zone d'observation (42, 43) des données géographiques respectives.

24. Dispositif selon la revendication 22 ou 23, le dispositif d'association (103, 104) présentant un dispositif de transformation, lequel est réalisé pour transformer des données géographiques correspondant à une zone d'observation définie (42, 43) en tenant compte d'informations de mouvement concernant un mouvement relatif du satellite et d'un corps spatial, de sorte que des données géographiques et des éléments d'image associés de la matrice d'image soient associés les uns aux autres dans la zone d'observation définie (42, 43).
